# EUROPEAN PATENT SPECIFICATION

(11) **EP 1 156 202 B1**
(45) Date of publication and mention of the grant of the patent: **11.01.2006**
(21) Application number: 01111843.7
(22) Date of filing: 16.05.2001
(51) Int. Cl.: F02D 21/08, F02D 41/40, F02P 19/00

(54) **Internal combustion engine**
Brennkraftmaschine
Moteur à combustion interne

(30) Priority: 17.05.2000 JP 2000149834; 18.05.2000 JP 2000152705
(43) Date of publication of application: 21.11.2001
(73) Proprietor: Toyota Jidosha Kabushiki Kaisha, Toyota-shi, Aichi-ken 471-8571 (JP)
(72) Inventor: Gotoh, Masato, Toyota-shi, Aichi-ken 471-8571 (JP); Sasaki, Shizuo, Toyota-shi, Aichi-ken 471-8571 (JP); Yoshizaki, Kouji, Toyota-shi, Aichi-ken 471-8571 (JP); Ito, Takekazu, Toyota-shi, Aichi-ken 471-8571 (JP)
(74) Representative: TBK-Patent

(56) References cited:
- EP-A- 0 732 485
- EP-A- 0 952 321
- EP-A- 0 967 373
- US-A- 5 241 929

## Description

### BACKGROUND OF THE INVENTION

### Field of the Invention

The present invention relates to an internal combustion engine.

### Prior Art

There has heretofore been known an internal combustion engine in which an amount of production of soot gradually increases and peaks when an amount of inert gas supplied into a combustion chamber increases and in which a further increase of the amount of inert gas supplied into the combustion chamber results in the temperatures of the fuel and the surrounding gas, at the time of combustion in the combustion chamber, becoming lower than a temperature of production of soot and therefore almost no production of soot occurs, wherein a first combustion where the amount of the inert gas supplied into the combustion chamber is larger than the amount of inert gas where the amount of production of soot peaks and almost no soot is produced and a second combustion where the amount of inert gas supplied into the combustion chamber is smaller than the amount of inert gas where the amount of production of soot peaks are selectively switched. An internal combustion engine of this kind has been disclosed in, for example, Japanese Unexamined Patent Publication (Kokai) No. 11-93748.

Here, an air-fuel ratio in the first combustion in which the amount of the inert gas supplied into the combustion chamber is larger than the amount of the inert gas with which the production of soot peaks, and almost no soot is formed, is richer than an air-fuel ratio in the second combustion in which the amount of the inert gas supplied into the combustion chamber is smaller than the amount of the inert gas with which the production of soot peaks. That is the oxygen concentration in the first combustion is smaller than the oxygen concentration in the second combustion. Therefore, the first combustion is unstable compared to the second combustion. However, Japanese Unexamined Patent Publication (Kokai) No. 11-107861 does not teach a method of suppressing the first combustion from becoming unstable compared tp the second combustion. Therefore, the internal combustion engine taught in Japanese Unexamined Patent Publication (Kokai) No. 11-107861 is not capable of preventing the first combustion from becoming unstable compared to the second combustion.

There has further been known an internal combustion engine capable of executing a combustion in which the amount of soot that is formed gradually increases and reaches a peak with an increase in the amount of an inert gas supplied into a combustion chamber and in which a further increase in the amount of the inert gas supplied into the combustion chamber results in a drop in the temperatures of the fuel and of the surrounding gas at the time of combustion in the combustion chamber to be lower than a soot-producing temperature to generate almost no soot, and the amount of the inert gas supplied to the combustion chamber is larger than the amount of the inert gas with which the production of soot peaks to permit the production of almost no soot. The internal combustion engine of this kind has been taught in, for example, Japanese Unexamined Patent Publication (Kokai) No. 11-107861. There have further been known internal combustion engines equipped with combustion stabilizing means for stabilizing the combustion. The internal combustion engines of this kind have been taught in, for example, Japanese Unexamined Patent Publication (Kokai) No. 9-88794 and Japanese Examined Patent Publication (Kokoku) No. 4-75393.

However, though Japanese Unexamined Patent Publication (Kokai) No. 9-88794 and Japanese Examined Patent publication (Kokoku) No. 4-75393 disclose operating the combustion stabilizing means, there is no teaching concerning a relationship between the timing for operating the combustion stabilizing means and the timing for fuel injection. Therefore, though the combustion can be stabilized by advancing the timing for fuel injection, an attempt to actuate the combustion stabilizing means results in an unnecessary actuation of the fuel stabilizing means. Further, an attempt to stabilize the combustion by advancing the fuel injection timing even when it is not desired to advance the fuel injection timing, causes the combustion to lose stability.

EP 0 732 485 A2 describes that, when performing pre-mixture fuel combustion, the amount of EGR gas is reduced with respect to the amount of intake air in a low load region, so that the oxygen concentration in the air-fuel pre-mixture in the cylinder can be maintained high. That is, according to Dl, the oxygen concentration is raised (or maintained high) by reducing the amount of EGR gas.

EP 0 967 373 A2 includes a description relating to the "low temperature combustion", and it also describes that additional fuel is injected in the latter half of the expansion stroke or during the exhaust stroke. However, this sub-injection is for making the air-fuel ratio of the exhaust gas flowing into a NOx absorbent rich, so that the NOx absorbent desorbs the nitrogen oxides (NOx).

### SUMMARY OF THE INVENTION

It is an object of the present invention to provide an internal combustion engine in which the torque fluctuation and degradation due to unstable combustion can be avoided. This object is solved with the features of claim 1.

According to a first aspect of the invention, there is provided an internal combustion engine, in which an amount of production of soot gradually increases and then peaks when an amount of inert gas supplied into a combustion chamber increases and in which a further increase of the amount of inert gas supplied into the combustion chamber results in a temperature of fuel and surrounding gas at the time of combustion in the combustion chamber becoming lower than a temperature of production of soot and therefore almost no production of soot occurs, wherein a first combustion where the amount of the inert gas supplied into the combustion chamber is larger than the amount of inert gas where the amount of production of soot peaks and almost no soot is produced and a second combustion where the amount of inert gas supplied into the combustion chamber is smaller than the amount of inert gas where the amount of production of soot peaks are selectively switched, characterized in that whenever the first combustion is performed, not only a main injection which is performed near a compression top dead center, but also a further injection which is performed at a different timing from a timing of the main injection, are performed.

In the internal combustion engine of the first aspect, the main injection is performed near the compression top dead center accompanied by a further injection at a timing different from that of the main injection in the first combustion in which the amount of the inert gas supplied to the combustion chamber is larger than the amount of the inert gas with which the production of soot peaks to permit the production of almost no soot. In the first combustion, the oxygen concentration is smaller than that in the second combustion in which the amount of the inert gas supplied into the combustion chamber is smaller than the amount of the inert gas with which the production of soot becomes a peak. However, the further injection at a timing different from that of the main injection forms a peroxide which compensates for the lack of the oxygen concentration. This prevents the first combustion from losing stability, compared to the second combustion, that stems from the lack of oxygen concentration.

According to a second aspect of the invention, there is provided an internal combustion engine of the first invention, wherein an air-fuel ratio of the exhaust gas is made richer than an air-fuel ratio in the cylinder by performing the further injection.

In the internal combustion engine of the second aspect, the air-fuel ratio of the exhaust gas is made richer than the air-fuel ratio in the cylinder due to the further injection. Therefore, the combustion is stabilized by setting the air-fuel ratio in the cylinder to be relatively lean, and the temperature of the catalyst arranged in the exhaust gas passage is elevated by setting the air-fuel ratio of the exhaust gas to be relatively rich.

According to a third aspect of the invention, there is provided an internal combustion engine of the first aspect, wherein, when the first combustion is performed, as an air-fuel ratio becomes richer, an amount of the main injection is decreased and an amount of the further injection is increased.

In the internal combustion engine of the third aspect, as the air-fuel ratio becomes richer in the first combustion, the amount of the main injection is decreased and the amount of the further injection is increased. This prevents the combustion from losing stability as the air-fuel ratio becomes rich in the cylinder, while the total amount of injection is maintained constant to suppress a change in the output.

According to a fourth aspect of the invention, there is provided an internal combustion engine of the first aspect, wherein an amount of the further injection is increased as a load becomes lower.

In the internal combustion engine of the fourth aspect, the amount of the further injection is increased with a decrease in the load. That is, the amount of the main injection is decreased with a decrease in the load, while the amount of the further injection is increased. This prevents the combustion from losing stability as the air-fuel ratio becomes rich in the cylinder when the load is low, and where the combustion tends to lose stability, while maintaining the total amount of injection constant to suppress a change in the output.

According to a fifth aspect of the invention, there is provided an internal combustion engine of the first aspect, wherein, not only while the first combustion is performed, but also while the second combustion is performed, the further injection is performed at an end of a compression stroke immediately before the timing of the main injection and a timing of the further injection during the first combustion is advanced more than a timing of the further injection during the second combustion.

In the internal combustion of the fifth aspect, the further injection is performed in the first combustion at the end of the compression stroke just before the main injection, advanced ahead of the further injection, that is performed in the second combustion at the end of the compression stroke just before the main injection. Upon effecting the further injection in addition to the main injection, the combustion is stabilized by a peroxide formed by the further injection. When the further injection is effected at the end of the compression stroke just before the main injection, oxygen is consumed and becomes in short supply when the main injection is performed. As described above, therefore, the further injection is performed in the first combustion at the end of the compression stroke just before the main injection being advanced ahead of the further injection that is performed in the second combustion at the end of the compression stroke just before the main injection. That is, the timing of the further injection in the first combustion is advanced ahead of that in the second injection to suppress the lack of oxygen when the main injection is performed in the first combustion. Besides, the further injection is performed in the first combustion to stabilize the combustion by utilizing a peroxide formed by the further injection.

According to a sixth aspect of the invention, there is provided an internal combustion engine of the first aspect, wherein the engine comprises an exhaust gas recirculation passage with a catalyst, wherein the further injection is performed when the first combustion is performed.

In the internal combustion engine of the sixth aspect, the further injection is performed in the first combustion in an internal combustion engine having an exhaust gas recirculation passage with catalyst. In the first combustion, fuel flows in an increased amount into the exhaust gas recirculation passage compared to that in the second combustion. Fuel that has passed into the exhaust gas recirculation passage is purified by the catalyst in the exhaust gas recirculation passage. When the catalyst has not been activated, however, the fuel that has passed into the exhaust gas recirculation passage is directly supplied into the combustion chamber. As described above, therefore, the further injection is performed in the first combustion in order to decrease the ratio of the recirculated fuel compared to the fuel fed into the combustion chamber before the main injection. This suppresses the amount of fuel fed into the combustion chamber before the main injection from greatly changing depending upon whether the catalyst in the exhaust gas recirculation passage has been activated.

### BRIEF DESCRIPTION OF THE DRAWINGS

Fig. 1 is an overall diagram of a compression ignition type internal combustion engine according to a first embodiment;
Fig. 2 is a diagram illustrating the amounts of production of smoke and NOx;
Figs. 3A and 3B are diagrams of combustion pressures;
Fig. 4 is a diagram illustrating fuel molecules;
Fig. 5 is a diagram illustrating a relationship between the amounts of smoke produced and the EGR ratio;
Fig. 6 is a diagram illustrating a relationship between the amount of fuel injection and the amount of the mixture gas;
Fig. 7 is a diagram illustrating a first operating region I and a second operating region II;
Fig. 8 is a diagram illustrating the output of an air-fuel ratio sensor;
Figs. 9A and 9B are diagrams illustrating air-fuel ratios in the first operating region I;
Figs. 10A and 10B are diagrams of maps of target opening degrees of a throttle valve and the like valve;
Figs. 11A and 11B are diagrams of maps of fuel injection amounts;
Figs. 12A and 12B are diagrams illustrating air-fuel ratios in the second combustion;
Figs. 13A and 13B are diagrams of maps of target opening degrees of the throttle valve and the like valve;
Fig. 14 is a diagram of a map of fuel injection amounts;
Figs. 15 and 16 are flowcharts for contrclling the operation of the engine;
Figs. 17A to 17C are diagrams of maps illustrating basic injection amounts in the pilot injection;
Fig. 18 is a diagram illustrating the fuel injection timings according to a first embodiment;
Fig. 19 is a diagram illustrating the fuel injection timings according to a third embodiment;
Fig. 20 is an overall diagram of the compression ignition type internal combustion engine according to a fourth embodiment; not according to the invention
Figs. 21A to 21C are diagrams illustrating combustion pressures;
Fig. 22 is a diagram illustrating opening degrees of a throttle valve;
Figs. 23A and 23B are diagrams illustrating air-fuel ratios in the first operating region I;
Figs. 24A and 24B are diagrams of maps illustrating target opening degrees of the throttle valve and the like valve;
Figs. 25A and 25B are diagrams illustrating air-fuel ratios in the second combustion;
Figs. 26A and 26B are diagrams of maps illustrating target opening degrees of the throttle valve and the like valve;
Fig. 27 is a diagram of a map illustrating the fuel injection amounts;
Fig. 28 is a flowchart for controlling the operation of the engine;
Fig. 29 is a flowchart illustrating how to stabilize the combustion;
Fig. 30 is a diagram illustrating a duty-cycle in supplying an electric current to a glow plug;
Fig. 31 is an overall diagram of the compression ignition type internal combustion engine according to a fifth embodiment; not according to the invention
Fig. 32 is a sectional view illustrating an intake port according to the fifth embodiment on an enlarged scale;
Fig. 33 is a flowchart illustrating a method of stabilizing the combustion according to the fifth embodiment; and
Fig. 34 is a sectional view illustrating the intake port according to the sixth embodiment on an enlarged scale. not according to the invention

### DESCRIPTION OF THE PREFERRED EMBODIMENTS

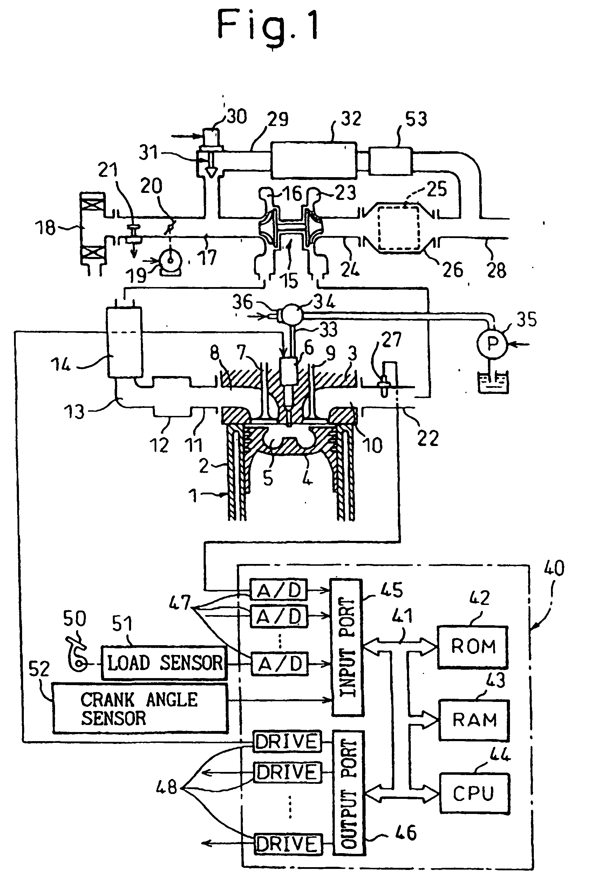

Fig. 1 is a diagram illustrating a first embodiment in which the present invention is applied to a four-stroke compression ignition type internal combustion engine. In Fig. 1, reference numeral 1 denotes an engine body, 2 a cylinder block, 3 a cylinder head, 4 a piston, 5 a combustion chamber, 6 an electrically controlled fuel injector, 7 an intake valve, 8 an intake port, 9 an exhaust valve, and reference numeral 10 denotes an exhaust port. The intake port 8 is connected to a surge tank 12 through a corresponding intake pipe 11. The surge tank 12 is connected through an intake duct 13 and an intercooler 14 to the outlet portion of a supercharger, e.g., to the outlet portion of a compressor 16 of an exhaust gas turbo charger 15. The inlet portion of the compressor 16 is connected to an air cleaner 18 through an air intake pipe 17 in which is arranged a throttle valve 20 that is driven by a step motor 19. A mass flow-rate detector 21 is disposed in the air intake pipe 17 on the upstream of the throttle valve 20 for detecting the mass flow rate of the air taken in.

The exhaust port 10 is connected to the inlet portion of an exhaust gas turbine 23 of the exhaust gas turbo charger 15 through an exhaust manifold 22, and the outlet portion of the exhaust gas turbine 23 is connected to a catalytic converter 26 containing a catalyst 25 having an oxidizing function through an exhaust pipe 24. An air-fuel ratio sensor 27 is arranged in the exhaust manifold 22. An exhaust pipe 28 connected to the outlet portion of the catalytic converter 26 is connected to the air intake pipe 17 on the downstream of the throttle valve 20 through an exhaust gas recirculation (hereinafter abbreviated as EGR) passage 29 in which is disposed an EGR control valve 31 driven by a step motor 30. An EGR cooler 32 is disposed in the EGR passage 29 for cooling the EGR gas flowing through the EGR passage 29. In the embodiment shown in Fig. 1, the engine cooling water is guided into the EGR cooler 32, and the EGR gas is cooled by the engine cooling water. Further, a catalyst 53 is disposed in the EGR passage 29 for purifying the EGR gas that flows through the EGR passage 29.

The fuel injector 6 is coupled to a fuel reservoir or a so-called common rail 34 through a fuel supply pipe 33. Fuel is supplied to the common rail 34 from an electrically controlled variable discharge fuel pump 35. Fuel supplied into the common rail 34 is then supplied to the fuel injectors 6 through the fuel supply pipes 33. A fuel pressure sensor 36 for detecting the fuel pressure in the common rail 34 is attached to the common rail 34. The amount of discharge of the fuel pump 35 is controlled based on the output signal of the fuel pressure sensor 36 so that the fuel pressure in the common rail 34 assumes a target fuel pressure.

The electronic control unit 40 is comprised of a digital computer and is provided with a ROM (read-only memory) 42, a RAM (random access memory) 43, a CPU (microprocessor) 44, an input port 45 and an output port 46 connected with each other through a bidirectional bus 41. The output signal of the mass flow-rate detector 21 is input through a corresponding AD converter 47 to the input port 45. The output of the air-fuel ratio sensor 27 is input through a corresponding AD converter 47 to the input port 45, and the output signal of the fuel pressure sensor 36 is input through a corresponding AD converter (not shown) into the input port 45. A load sensor 51 is connected to an accelerator pedal 50 to generate an output voltage in proportion to the amount L the accelerator pedal 50 is depressed. The output voltage of the load sensor 51 is input through a corresponding AD converter 47 to the input port 45. Further, a crank angle sensor 52 is connected to the input port 45 to generate an output pulse every time when the crank shaft has rotated by, for example, 30 degrees. The engine rotational speed is calculated based on the output signals from the crank angle sensor 52. The output port 46 is connected to the fuel injector 6, step motor 19 for controlling the throttle valve, step motor 30 for controlling the EGR control valve and to the fuel pump 35 through corresponding drive circuits 48.

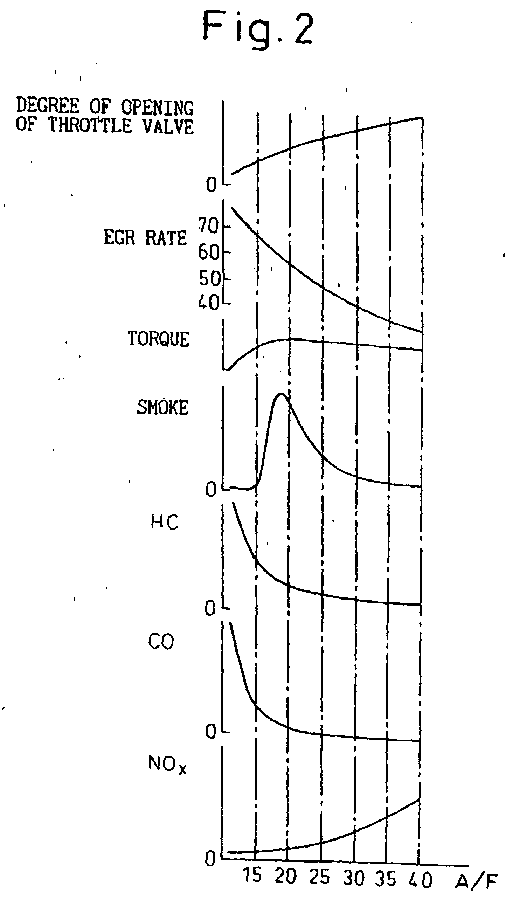

Fig. 2 is a diagram of an experimental example illustrating changes in the output torque and in the amounts of emission of smoke, HC, CO and NOx of when the air-fuel ratio A/F (abscissa in Fig. 2) is changed by changing the opening degree of the throttle valve 20 and the EGR rate when the engine is operated in a low load condition. As will be understood from Fig. 2, in this experiment, the EGR rate increases with a decrease in the air-fuel ratio A/F. The EGR rate is not smaller than 65 percent when the air-fuel ratio A/F is not larger than the stoichiometric air-fuel ratio (nearly equal to 14.6). Referring to Fig. 2, the air-fuel ratio A/F decreases as the EGR rate increases, and the amount of smoke that is produced starts increasing when the EGR rate approaches near 40 percent and the air-fuel ratio A/F becomes about 30. Then, when the EGR rate is further increased to decrease the air-fuel ratio A/F, the amount of smoke that is produced sharply increases and reaches a peak. As the EGR rate is further increased to decrease the air-fuel ratio A/F, the amount of smoke, then, sharply decreases. When the EGR rate becomes not smaller than 65 percent and the air-fuel ratio A/F becomes nearly 15.0, the smoke is almost not produced. That is, soot is almost not produced. At this moment, the output torque of the engine slightly decreases, and the formation of NOx is considerably decreased. At this moment, however, the amounts of HC and CO start increasing.

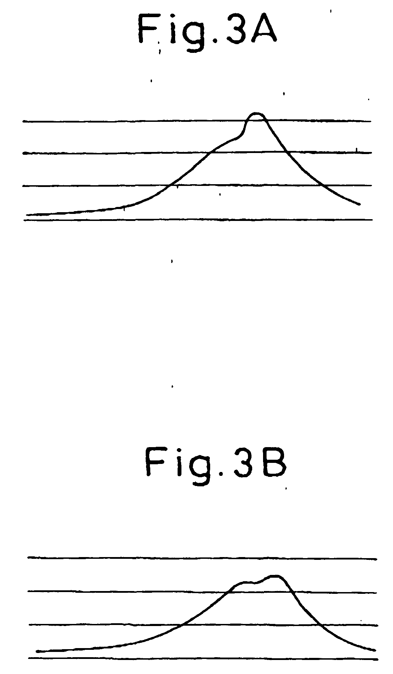

Fig. 3A shows a change in the combustion pressure in the combustion chamber when the amount of smoke production is the greatest near the air-fuel ratio A/F of 21, and Fig. 3B shows a change in the combustion pressure in the combustion chamber 5 when the amount of smoke production is nearly zero near the air-fuel ratio A/F of 18. As will be understood from a comparison of Fig. 3A with Fig. 3B, the combustion pressure is lower in the case of Fig. 3B where the amount of smoke production is nearly zero than in the case shown in Fig. 3A where the smoke is produced in large amounts. Though not diagrammed, from the results of experiment similar to that of Figs. 3A and 3B, it has been learned that a maximum value (peak) of the combustion pressure in the first combustion (low-temperature combustion) where the amount of EGR gas supplied into the combustion chamber 5 is larger than the amount of EGR gas with which the amount of soot production becomes a peak and soot is almost not produced, is smaller than a maximum value (peak) of the combustion pressure in the second combustion (by the conventional method of combustion) in which the amount of EGR gas supplied into the combustion chamber 5 is smaller than the amount of EGR gas with which the amount of soot production becomes a peak. From this fact, it can be said that a fluctuation in the engine rotational speed due to the explosion of the first combustion is smaller than a fluctuation in the engine rotational speed due to the explosion of the second combustion.

The following can be said from the experimental results shown in Figs. 2, 3A and 3B. That is, first, when the air-fuel ratio A/F is not larger than 15.0 and the amount of smoke production is almost zero, the amount of NOx production decreases considerably as shown in Fig. 2. A decrease in the amount of NOx production means that the combustion temperature has dropped in the combustion chamber 5. Therefore, it can be said that when soot is not almost produced, the combustion temperature is low in the combustion chamber 5. The same can also be said from Figs. 3A and 3B. That is, in the state shown in Fig. 3B where almost no soot is produced, the combustion pressure is low and, hence, the combustion temperature is low in the combustion chamber 5.

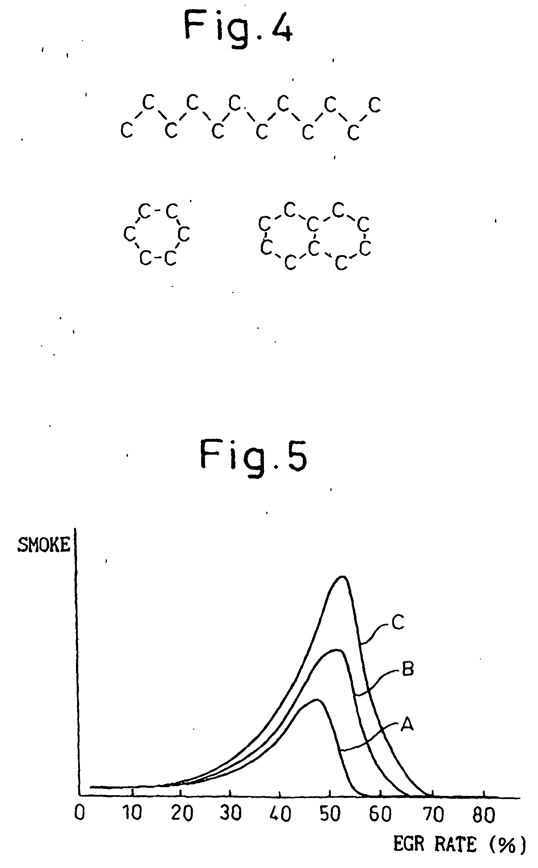

Second, when the amount of smoke production becomes nearly zero or when the amount of soot production becomes nearly zero, the amounts of HC and CO emission increase as shown in Fig. 2. This means that the hydrocarbons are emitted without growing into soot. That is, the straight-chain hydrocarbons and aromatic hydrocarbons shown in Fig. 4 contained in the fuel undergo the thermal decomposition when heated in an oxygen-deficient state to form a soot precursor. Then, the soot chiefly comprising solid masses of carbon atoms is produced. Here, soot is, in practice, formed through a complex process, and it is not obvious how the soot precursor is formed. Whatever the case, the hydrocarbons shown in Fig. 4 grow into soot through the soot precursor. Therefore, as explained above, when the amount of soot production becomes almost zero, the amounts of HC and CO emission increase as shown in Fig. 2. Here, however, HC is a soot precursor or assumes a state of hydrocarbons preceding the precursor.

Summarizing these considerations based on the experimental results shown in Figs. 2, 3A and 3B, the amount of soot production becomes nearly zero when the combustion temperature is low in the combustion chamber 5. At this time, the soot precursor or the hydrocarbons in a state preceding the precursor is emitted from the combustion chamber 5. Experiment and study were done in further detail, and it was learned the process of growth of soot is not completed when the temperatures of the fuel and of the surrounding gas in the combustion chamber 5 are lower than a certain temperature. Therefore, no soot is produced at all. The soot, however, is produced when the fuel and the surrounding gas in the combustion chamber 5 are heated in excess of the certain temperature.

It is difficult to exactly specify the temperatures of the fuel and of the surrounding gas at which the process of forming hydrocarbons in the form of soot precursor is discontinued without being completed, since the temperatures vary depending upon various factors such as the kind of the fuel, air-fuel ratio, compression ratio, etc. The temperatures, however, are deeply related to the amount of NOx production. Therefore, the temperatures can be specified to some extent from the amount of NOx production. That is, as the EGR rate increases, the temperatures of the fuel and of the surrounding gas decrease during the combustion and the amount of NOx production decreases. Soot is not almost produced when the amount of NOx production decreases down to about 10 ppm or less. Therefore, the above temperature is nearly in agreement with the temperature at which the amount of NOx production becomes 10 ppm or less. However, soot that is once produced cannot be removed even by the after-treatment by using a catalyst having an oxidizing function. In contrast with this, the soot precursor or the hydrocarbons in the state preceding the precursor can be easily removed through the after-treatment by using the catalyst having an oxidizing function. Considering the after-treatment by the catalyst having oxidizing function, there is a very great difference between whether the hydrocarbons are emitted from the combustion chamber 5 in the form of a soot precursor or in a state preceding the precursor or are emitted in the form of soot from the combustion chamber 5. The new combustion system used in the present invention is based on an idea of emitting the hydrocarbons from the combustion chamber 5 in the form of a soot precursor or in a form preceding the precursor without producing the soot in the combustion chamber 5, and oxidizing the hydrocarbons using the catalyst having the oxidizing function.

In order to interrupt the growth of hydrocarbons in a state before the soot is produced, it is necessary to suppress the temperatures of the fuel and of the surrounding gas at the time of combustion to be lower than a temperature at which the soot is produced. In this case, it has been learned that the endothermic action of the gas surrounding the fuel at the time of combustion of the fuel has a very great effect upon suppressing the temperatures of the fuel and of the surrounding gas. That is, if there exists only air surrounding the fuel, the vaporized fuel readily reacts with oxygen in the air and burns. In this case, the temperature of the air away from the fuel does not rise much but the temperature is locally very high around the fuel only. That is, at this time, the air away from the fuel does not almost absorb the heat of combustion of the fuel. Here, the temperature of combustion becomes locally extremely high, and the unburned hydrocarbons that have received the heat of combustion turn into the soot.

However, the situation becomes different to some extent when the fuel exists in the mixed gas of a large amount of the inert gas and a small amount of air. In this case, the vaporized fuel diffuses in the surroundings and reacts with oxygen contained in the inert gas to burn. In this case, the heat of combustion is absorbed by the surrounding inert gas, and the temperature of combustion does not rise much. Namely, it becomes possible to keep the combustion temperature low. In other words, the presence of the inert gas plays an important role in suppressing the combustion temperature, and it is possible to maintain the combustion temperature low owing the endothermic action of the inert gas. Here, the temperatures of the fuel and of the surrounding gas are suppressed to be lower than the temperature at which the soot is produced only by using the inert gas in an amount large enough for absorbing the heat to a sufficient degree. Therefore, if the amount of fuel increases, the amount of the inert gas required must be increased correspondingly. Here, the larger the specific heat of the inert gas, the stronger the endothermic action, from which it is desired that the inert gas has a large specific heat. In this regard, CO₂ and EGR gas have relatively large specific heats, and it is desired to use the EGR gas.

Fig. 5 illustrates a relationship between the EGR rate and the smoke of when the EGR gas is used as the inert gas and the EGR gas is cooled at different rates. That is, a curve A in Fig. 5 represents a case where the temperature of the EGR gas is maintained at about 90°C by forcibly cooling the EGR gas, a curve B represents a case where the EGR gas is cooled by using a small cooling device, and a curve C represents a case where the EGR gas is not forcibly cooled. When the EGR gas is forcibly cooled as represented by the curve A in Fig. 5, the production of soot reaches a peak just before the EGR rate reaches 50 percent. In this case, therefore, almost no soot is produced when the EGR rate is not smaller than about 55 percent.

On the other hand, when the EGR gas is slightly cooled as represented by the curve B in Fig. 5, the production of soot reaches a peak when the EGR rate is slightly higher than 50 percent. In this case, almost no soot is, produced when the EGR rate is not smaller than about 65 percent. When the EGR gas is not forcibly cooled as represented by the curve C in Fig. 5, the production of soot reaches a peak when the EGR rate is near 55 percent. In this case, therefore, almost no soot is produced when the EGR rate is not smaller than about 70 percent. Fig. 5 shows the amount of smoke produced when the engine load is relatively high. When the engine load decreases, the EGR rate at which the amount of soot becomes a peak slightly decreases, and the lower limit of the EGR rate at which almost no soot is produced decreases, too, to a small extent. In this way, the lower limit of the EGR rate at which almost no soot is produced changes in accordance with the degree of cooling the EGR gas and the engine load.

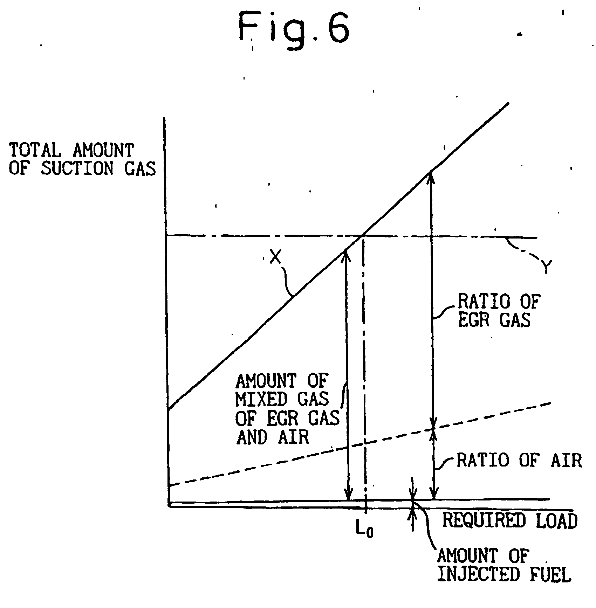

Fig. 6 shows the amount of mixed gas of the EGR gas and air, the ratio of the air in the mixed gas, and the ratio of the EGR gas in the mixed gas, required for decreasing the temperatures of the fuel and of the surrounding gas at the time of combustion to be lower than the temperature at which soot is produced by using the EGR gas as the inert gas. In Fig. 6, the ordinate represents the total amount of the gas taken in by the combustion chamber 5, and a dot-dash line Y represents the total amount of the gas that can be taken in by the combustion chamber 5 when the supercharging is not executed. The abscissa represents the required load.

Referring to Fig. 6, the ratio of the air, i.e., the amount of the air in the mixed gas, stands for the amount of the air necessary for completely burning the fuel. Namely, in the case shown in Fig. 6, the ratio of the amount of the air and the amount of the injected fuel is the stoichiometric air-fuel ratio. In Fig. 6, further, the ratio of the EGR gas, i.e., the amount of the EGR gas in the mixed gas stands for a minimum amount of EGR gas required for lowering the temperatures of the fuel and of the surrounding gas at the time when the injected fuel is burnt to be lower than the temperature at which the soot is produced. If expressed in terms of the EGR rate, the amount of the EGR gas is not smaller than about 55 percent and is not smaller than 70 percent in the embodiment shown in Fig. 6. That is, if the total amount of the gas taken in by the combustion chamber 5 is represented by a solid line X and the ratio of the amount of the air to the amount of the EGR gas in the total amount X of the gas taken in is set to be as shown'in Fig. 6, then, the temperatures of the fuel and of the surrounding gas become lower than the temperature at which the soot is produced. Thus, no soot is produced at all. The amount of NOx emitted at this time is about 10 ppm or less; i.e., NOx is emitted in very small amounts.

An increase in the amount of fuel injection results in an increase in the amount of heat generated when the fuel has burned. In order to maintain the temperatures of the fuel and of the surrounding gas to be lower than the temperature at which the soot is produced, therefore, the heat must be absorbed in an increased amount by the EGR gas. Therefore, as shown in Fig. 6, the amount of the EGR gas must be increased with an increase in the amount of the fuel injection. In other words, the amount of the EGR gas must be increased with an increase in the required load.

When no supercharging is executed, the upper limit of the total amount X of gas taken in by the combustion chamber 5 is as represented by the line Y. In a region where the required load is larger than L₀ in Fig. 6, therefore, the air-fuel ratio cannot be maintained at the stoichiometric air-fuel ratio unless the EGR gas rate is decreased with an increase in the required load. In other words, when it is attempted to maintain the air-fuel ratio at the stoichiometric air-fuel ratio in the region where the required load is larger than L₀ without executing the supercharging, the EGR rate decreases with an increase in the required load. In the region where the required load is larger than L₀, therefore, it becomes no longer possible to keep the temperatures of the fuel and of the surrounding gas lower than the temperature at which the soot is produced.

However, when the EGR gas is recirculated into the inlet side of the supercharger, i.e., into the air intake pipe 17 of the exhaust turbo charger 15 as shown in Fig. 1, the EGR rate can be maintained to be not smaller than 55 percent, for example, to be 70 percent in a region where the required load is not smaller than L₀ and, thus, the temperatures of the fuel and of the surrounding gas can be maintained to be lower than the temperature at which the soot is produced. That is, if the EGR gas is so recirculated that the EGR rate is, for example, 70 percent in the air intake pipe 17, the EGR rate of the intake gas boosted by the compressor 16 of the exhaust turbo charger 15 becomes 70 percent, too. Thus, the temperatures of the fuel and of the surrounding gas can be kept lower than the temperature at which the soot is produced up to a limit of a pressure produced by the compressor 16. It is therefore allowed to expand the region of engine operation where the low-temperature combustion can be established. In order to accomplish an EGR rate of not smaller than 55 percent in the region where the required load is larger than L₀, the EGR control valve 31 is fully opened and the throttle valve 20 is slightly closed.

As explained above, Fig. 6 illustrates the case of combustion of fuel at the stoichiometric air-fuel ratio. Even when the amount of the air is decreased to be smaller than the amount of the air shown in Fig. 6, i.e., even when the air-fuel ratio is made rich, it is possible to suppress the amount of NOx production to be about 10 ppm or less while preventing the production of soot. Further, even when the amount of the air is increased to be larger than the amount of the air shown in Fig. 6, i.e., even when the average air-fuel ratio is set to be as lean as 17 to 18, the amount of NOx production can be suppressed to be about 10 ppm or less while preventing the production of soot.

That is, when the air-fuel ratio is made rich, the fuel supply becomes in excess. However, since the fuel temperature has been suppressed to be low, the excess of fuel does not grow into soot and, hence, no soot is' produced. At this time, NOx is reduced in only very small amounts. On the other hand, even when the average air-fuel ratio is lean or even when the air-fuel ratio is the stoichiometric air fuel ratio, the soot is produced in small amounts if the combustion temperature becomes high. In the present invention, however, the combustion temperature is suppressed to be low, and no soot is produced at all. Besides, NOx is produced in only very small amounts.

In this way, no soot is produced and NOx is produced in very small amounts regardless of the air-fuel ratio during low-temperature combustion, i.e., regardless of whether the air-fuel ratio is rich, or is the stoichiometric air-fuel ratio, or whether the average air-fuel ratio is lean. From the standpoint of improving the fuel efficiency, therefore, it is desired to set the average air-fuel ratio to be lean.

However, the temperatures of the fuel and of the surrounding gas in the combustion chamber at the time of combustion can be suppressed to be lower than the temperature at which the growth of hydrocarbons is discontinued without being completed in the intermediate-to low-load operating conditions only of the engine where heat is generated by the combustion in relatively small amounts. In the embodiment of the present invention, therefore, when the engine is in the intermediate- to low-load operating conditions, a first combustion is effected by suppressing the temperatures of the fuel, and of the surrounding gas, at the time of combustion to be lower than the temperature at which the growth of hydrocarbons is discontinued without being completed to thereby establish the low-temperature combustion. When the engine is in the high-load operating condition, on the other hand, a second combustion is executed, i.e., normal combustion is executed as usual. Even when the engine is in the intermediate- to low-load operating conditions, however, the second combustion is executed depending upon the engine operating condition. Here, as will be obvious from the foregoing description, the first combustion or the low-temperature combustion stands for the combustion where the amount of the inert gas in the combustion chamber is larger than the amount of the inert gas with which the production of soot becomes a peak and, hence, almost no soot is produced, while the second combustion or the normal combustion executed as usual stands for the combustion where the amount of the inert gas in the combustion chamber is smaller than the amount of the inert gas with which the production of soot becomes a peak.

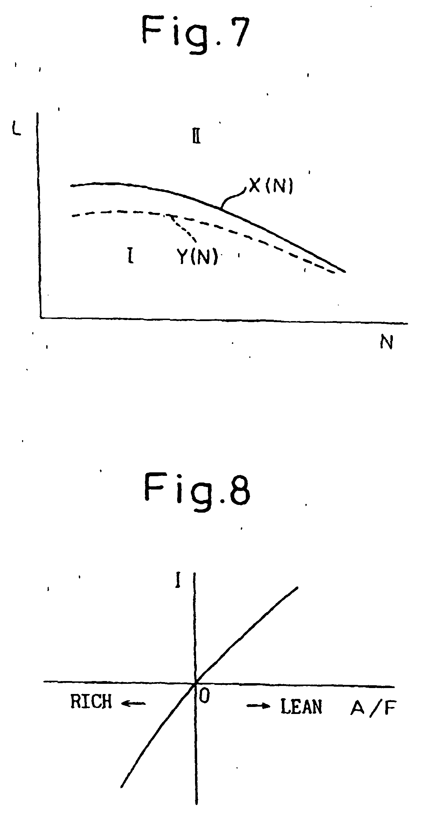

Fig. 7 shows a first operating region I where the first combustion is effected, i.e., where the low-temperature combustion is effected, and a second operating region II where the second combustion is effected, i.e., where the combustion is effected according to the conventional combustion method. In Fig. 7, the ordinate L represents the amount the accelerator pedal 50 is depressed, i.e., represents the required load, and the abscissa N represents the engine rotational speed. In Fig. 7, further, a curve X(N) represents a first boundary between the first operating region I and the second operating region II, and a curve Y(N) represents a second boundary between the first operating region I and the second operating region II. A change in the operating region from the first operating region I to the second operating region II is judged based on the first boundary X(N), while a change in the operating region from the second operating region II to the first operating region I is judged based on the second boundary Y(N).

That is, when the required load L exceeds the first boundary X(N) which is a function of the engine rotational speed N while the engine operating condition is in the first operating region I and the low-temperature combustion is being executed, it is so judged that the operating region has shifted into the second operating region II, and the combustion is effected according to the conventional combustion method. Then, when the required load L becomes smaller than the second boundary Y(N) which is a function of the engine rotational speed N, it is so judged that the operating region has shifted into the first operating region I, and the low-temperature combustion is executed again.

As described above, there are provided two boundaries, i.e., the first boundary X(N) and the second boundary Y(N) on the side of a load smaller than that of the first boundary X(N) on account of the following two reasons. A first reason is that the combustion temperature is relatively high on the high-load side of the second operating region II and even when the required load L becomes smaller than the first boundary X(N), the low-temperature combustion is not readily assumed. That is, the low-temperature combustion is not assumed unless the required load L becomes considerably small, i.e., becomes smaller than the second boundary Y(N). A second reason is to provide a hysteresis for a change in the operating region between the first operating region I and the second operating region II.

When the engine operating region is in the first operating region I and the low-temperature combustion is being effected, soot is almost not produced but, instead, the unburned hydrocarbons are emitted in the form of a soot precursor or in a form preceding the precursor from the combustion chamber 5. The unburned hydrocarbons emitted from the combustion chamber 5 are favorably oxidized by the catalyst 25 having an oxidizing function. An oxidizing catalyst can be used as the catalyst 25.

Fig. 8 shows the output of the air-fuel ratio sensor 27. As shown in Fig. 8, the output current I of the air-fuel ratio sensor 27 changes in accordance with the air-fuel ratio A/F. Therefore, it is possible to learn the air-fuel ratio from the output current I of the air-fuel ratio sensor 27.

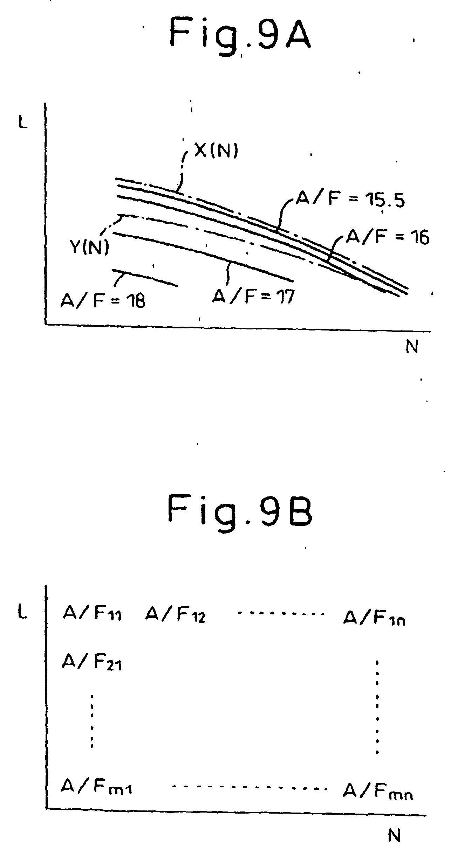

Fig. 9A illustrates target air-fuel ratios A/F in the first operating region I. In Fig. 9A, curves representing A/F = 15.5, A/F = 16, A/F = 17 and A/F = 18 are those of when the target air-fuel ratios are 15.5, 16, 17 and 18, and air-fuel ratios among the curves are determined by the proportional distribution. As shown in Fig. 9A, the air-fuel ratio is lean in the first operating region I. In the first operating region I, further, the target air-fuel ratio A/F becomes lean as the required load L decreases. That is, the amount of heat generated by the combustion decreases with a decrease in the required load L. Therefore, the low-temperature combustion can be effected even by lowering the EGR rate with a decrease in the required load L. The air-fuel ratio increases with a decrease in the EGR rate and, hence, the target air-fuel ratio A/F increases with a decrease in the required load L as shown in Fig. 9A. The fuel efficiency improves with an increase in the target air-fuel ratio A/F. According to the embodiment of the invention, therefore, the target air-fuel ratio A/F is increased as the required load L decreases in order to render the air-fuel ratio as lean as possible.

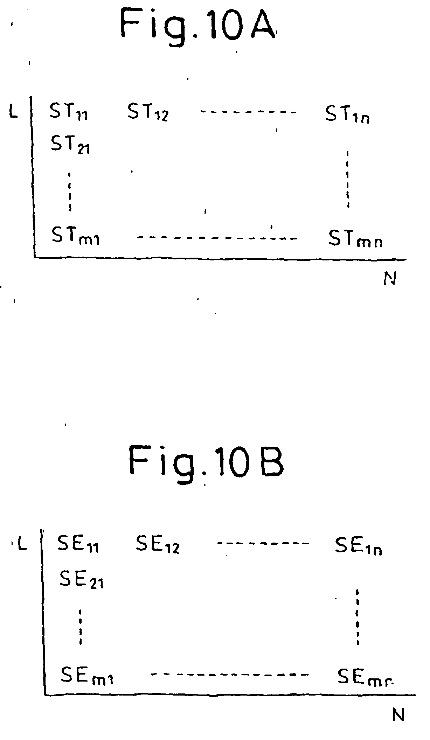

The target air-fuel ratio A/F shown in Fig. 9A has been stored in advance in the ROM 42 in the form of a map of a function of the required load L and the engine rotational speed N as shown in Fig. 9B. Further, the target opening degrees ST of the throttle valve 20, necessary for accomplishing the target air-fuel ratios A/F shown in Fig. 9A, have been stored in advance in the ROM 42 in the form of a map as a function of the required load L and the engine rotational speed N as shown in Fig. 10A. Moreover, target opening degrees SE of the EGR control valve 31 necessary for setting the air-fuel ratio to be target air-fuel ratios A/F shown in Fig. 9A, have been stored in advance in the ROM 42 in the form of a map as a function of the required load L and the engine rotational speed N as shown in Fig. 10B.

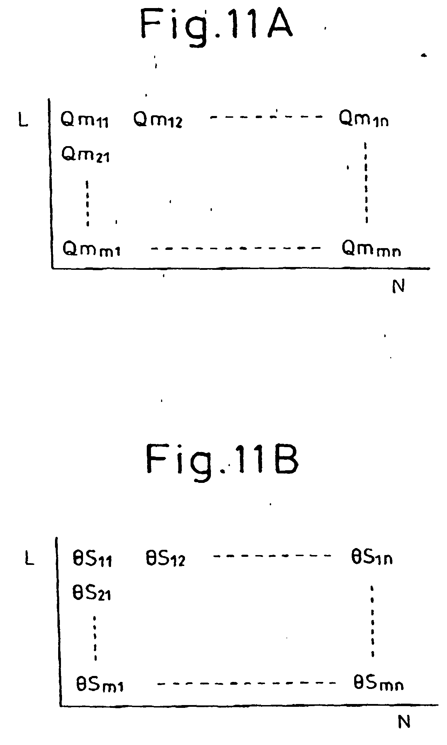

When the first combustion is being executed, further, the amount Qm of the main fuel injection is calculated based upon the required load L and the engine rotational speed N. The amount Qm of the main fuel injection Qm has been stored in advance in the ROM 42 in the form of a map as a function of the required load L and the engine rotational speed N as shown in Fig. 11A. Further, the timing θS for starting the main fuel injection has been set near the compression top dead center TDC, and has been stored in advance in the ROM 42 in the form of a map as a function of the required load L and the engine rotational speed N as shown in Fig. 11B, so as to be delayed with an increase in the required load L.

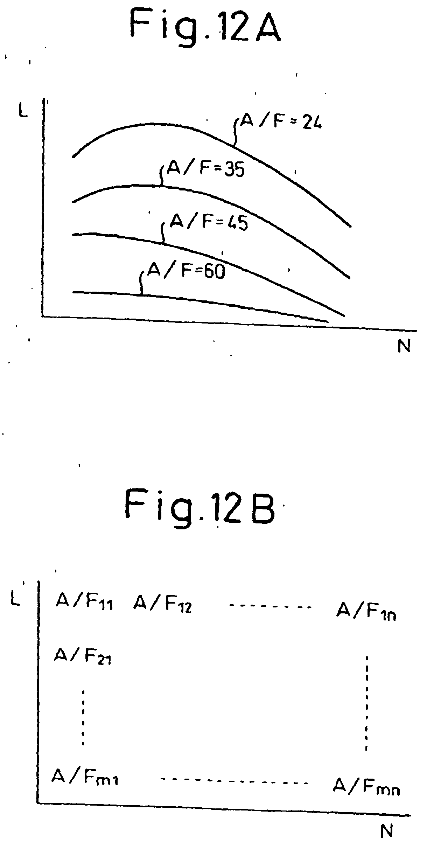

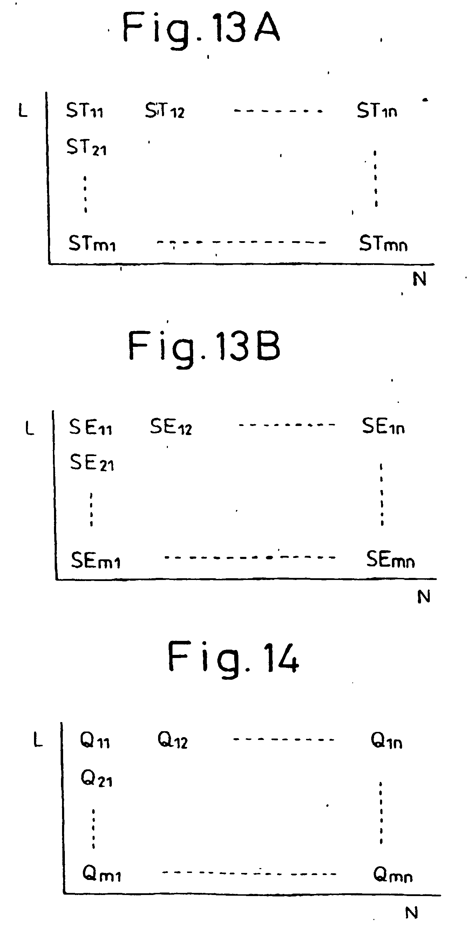

Fig. 12A shows target air-fuel ratios A/F at the time of the second combustion, i.e., at the time of normal combustion by the conventional combustion method. In Fig. 12A, curves represented by A/F = 24, A/F = 35, A/F = 45 and A/F = 60, stand for target air-fuel ratios 24, 35, 45 and 60, respectively. The target air-fuel ratios A/F shown in Fig. 12A have been stored in advance in the ROM 42 in the form of a map as a function of the required load L and the engine rotational speed N as shown in Fig. 12B. Target opening degrees ST of the throttle valve 20 necessary for setting the air-fuel ratio to be the target air-fuel ratios A/F shown in Fig. 12A have been stored in advance in the ROM 42 in the form of a map as a function of the required load L and the engine rotational speed N as shown in Fig. 13A, and target opening degrees SE of the EGR control valve 31 necessary for setting the air-fuel ratio to be the target air-fuel ratios A/F shown in Fig. 12A have been stored in advance in the ROM 42 in the form of a map as a function of the required load L and the engine rotational speed N as shown in Fig. 13B. When the second combustion is being executed, the amount Q of fuel injection is calculated based upon the required load L and the engine rotational speed N. The fuel injection amount Q has been stored in advance in the ROM 42 in the form of a map as a function of the required load L and the engine rotational speed N as shown in Fig. 14.

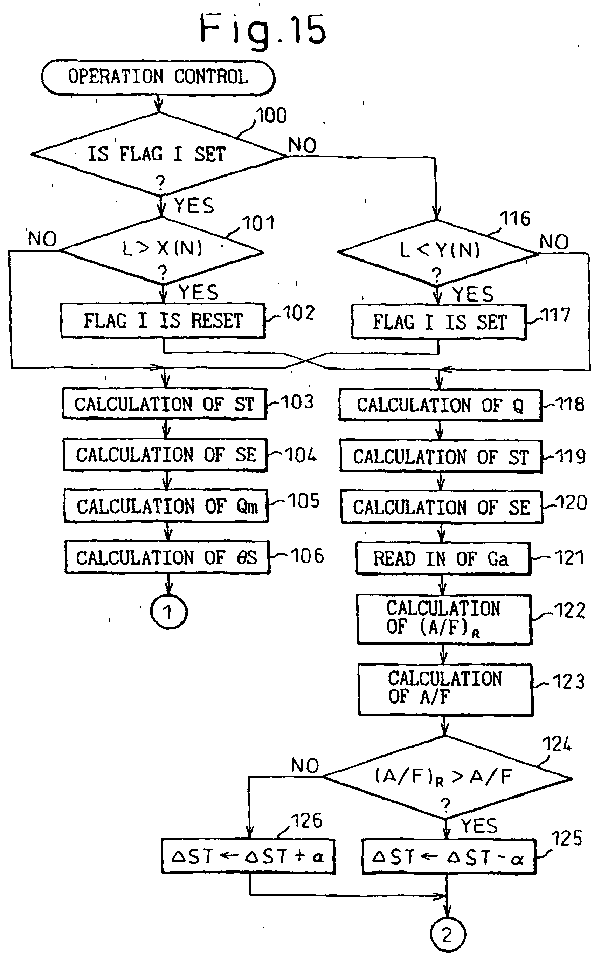

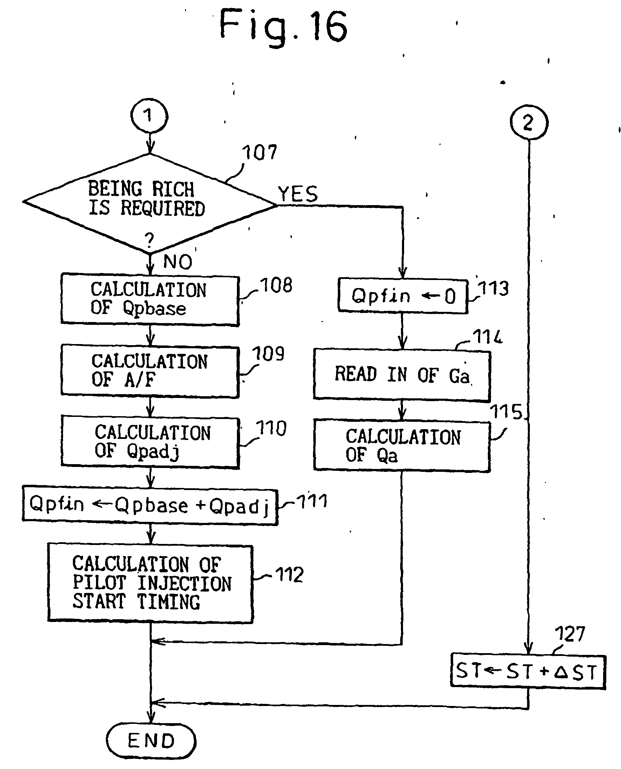

Next, controlling the operation according to the embodiment will be described with reference to Figs. 15 and 16. Referring to Figs. 15 and 16, first, it is judged at step 100 whether a flag I has been set to indicate that the operating condition of the engine is in the first operating region I. When the flag I has been set, i.e., when the operating condition of the engine is in the first operating region I, the routine proceeds to step 101 where it is judged whether the required load has become larger than the first boundary X(N). When L ≦ X(N), the routine proceeds to step 103 to execute the first combustion (low-temperature combustion). On the other hand, when it is judged at step 101 that L > X(N), the routine proceeds to step 102 where the flag I is reset. The routine, then, proceeds to step 118 where the second combustion (normal combustion, i.e., conbustion by the conventional combustion method) is effected.

When the flag I has not been set at step 100, i.e., when the operating condition of the engine is in the second operating region II, the routine proceeds to step 116 where it is judged whether the required load has become smaller than the second boundary Y(N). When L ≧ Y(N), the routine proceeds to step 118 where the second combustion is effected. When it is judged at step 116 that L < Y(N), the routine proceeds to step 117 where the flag I is set. The routine then proceeds to step 103 to effect the first combustion.

At step 103, a target opening degree ST of the throttle valve 20 is calculated from the map shown in Fig. 10A, and the opening degree of the throttle valve is used as the target opening degree ST. Then, at step 104, a target opening degree SE of the EGR control valve 31 is calculated from the map shown in Fig. 10B, and the opening degree of the EGR control valve 31 is used as the target opening degree SE. Next, at step 105, a target fuel injection amount Qm of main injection is calculated from the map shown in Fig. 11A, and the amount of the main fuel injection is used as the target fuel injection amount Qm. Then, at step 106, a target timing θS for starting the main fuel injection is calculated from the map shown in Fig. 11B, and the timing for starting the main fuel injection is used as the target timing θS for starting the fuel injection.

Next, at step 107, it is judged whether it has been requested to enrich the exhaust gas. When the answer is no, the routine proceeds to step 108 and an auxiliary fuel injection or a so-called pilot injection is effected near the compression top dead center TDC at the end of the compression stroke just before the main injection. When the answer is yes, on the other hand, the routine proceeds to step 113 where the auxiliary fuel injection is executed near the compression top dead center TDC in the expansion stroke after the main injection.

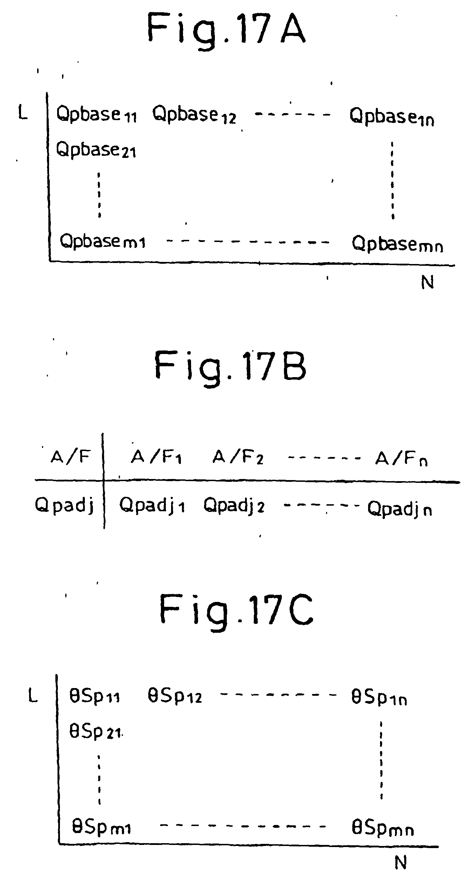

At step 108, a basic injection amount Qpbase of pilot injection is calculated based on the map shown in Fig. 17A that has been stored in advance in the ROM 24 as a function of the required load L and the engine rotational speed N. If described in detail, the basic injection amount Qpbase of pilot injection has been set to increase with a decrease in the required load L and to increase with an increase in the engine rotational speed N. Then, at step 109, A/F is calculated based on the output of the air-fuel ratio sensor 27. At step 110, a correction amount Qpadj for the basic injection amount is calculated based on the A/F calculated at step 109 and based upon the map shown in Fig. 17B illustrating a relationship between A/F and the correction amount Qpadj for the basic injection amount. In further detail, the correction amount Qpadj has been so set as to increase as the air-fuel ratio becomes dense. Then, at step 111, a final injection amount Qpfin is calculated based upon the basic injection amount Qpbase and the correction amount Qpadj therefor (Qpfin ← Qpbase + Qpadj). Namely, the final injection amount Qpfin of the pilot injection increases as the air-fuel ratio becomes dense. Then, at step 112, a target timing θSp for starting the pilot fuel injection is calculated from the map shown in Fig. 17C, and the timing for starting the pilot fuel injection is used as the target timing θSp for starting the fuel injection. In detail, the timing θSp for starting the pilot fuel,injection is advanced as the required load L becomes small, and is advanced as the engine rotational speed N increases.

At step 113, the final injection amount Qpfin of the pilot injection is brought to zero. Then, at step 114, the intake air amount Ga detected by the mass flow-rate detector 21 is read. At step 115, the injection amount Qa in the expansion stroke is calculated (Qa ← Ga/12 - Qm).

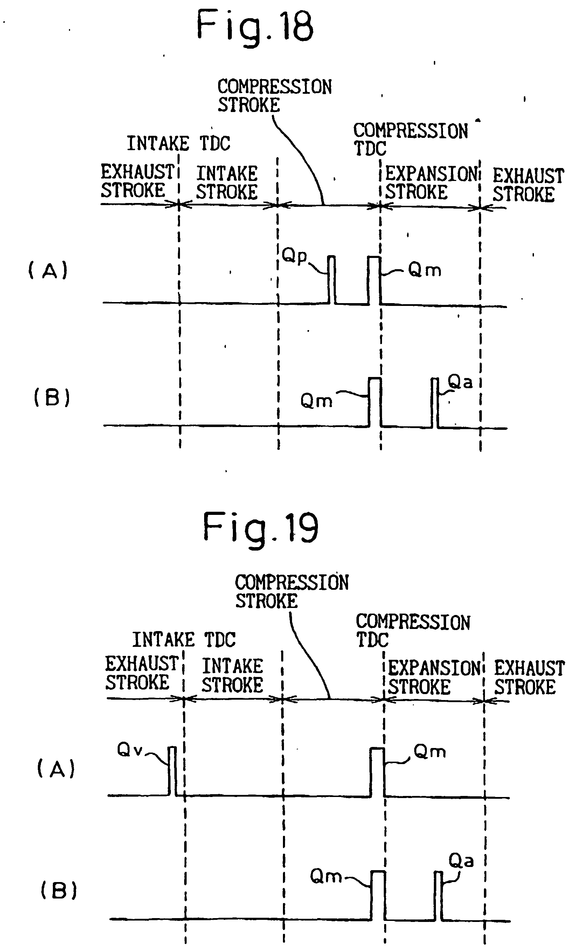

In this embodiment as described above, when the first combustion is effected, the main injection is executed near the compression top dead center TDC followed by the pilot injection or the injection in the expansion stroke at a timing different from the main injection. If described in detail, when the first combustion is effected but it is not requested to enrich the exhaust gas, the pilot injection (Qp) is, first, effected at the end of the compression stroke as shown in Fig. 18(A) and, then, the main injection (Qm) is effected, near the compression top dead center TDC. On the other hand, when it is requested to enrich the exhaust gas while the first combustion is being effected, the main injection (Qm) is, first, executed near the compression top dead center TDC as shown in Fig. 18(B) and, then, the injection (Qa) is executed in the expansion stroke.

At step 118, on the other hand, a target fuel injection amount Q is calculated from the map shown in Fig. 14, and this fuel injection amount is used as the target fuel injection amount Q. Then, at step 119, a target opening degree ST of the throttle valve 20 is calculated from the map shown in Fig. 13A. At step 120, a target opening degree SE of the EGR control valve 31 is calculated from the map shown in Fig. 13B, and the opening degree of the EGR control valve 31 is used as the target opening degree SE. Then, at step 121, an intake air amount Ga detected by the mass flow-rate detector is read.

Then, at step 122, a real air-fuel ratio (A/F)_{R} is calculated from the fuel injection amount Q and the intake air amount Ga. At step 123, a target air-fuel ratio A/F is calculated from the map shown in Fig. 12B. Then, at step 124, it is judged whether the real air-fuel ratio (A/F)_{R} is larger than the target air-fuel ratio A/F. When (A/F)_{R} > A/F, the routine proceeds to step 125 where a correction value ΔST for the throttle opening degree is decreased by a predetermined value α only, and the routine proceeds to step 127. when (A/F)_{R} ≦ A/F, on the other hand, the routine proceeds to step 126 where the correction value ΔST is increased by the predetermined value α only, and the routine proceeds to step 127. At step 127, the correction value ΔST is added to the target opening degree ST of the throttle valve 20 to calculate a final target opening degree ST. The opening degree of the throttle valve 20 is used as the final target opening degree ST. That is, the opening degree of the throttle valve 20 is so controlled that the real air-fuel ratio (A/F)_{R} becomes the target air-fuel ratio A/F.

Thus, when the second combustion is being effected, the amount of fuel injection is readily brought into agreement with the target amount Q of fuel injection corresponding to the required load L and the engine rotational speed N upon a change in the required load L or the engine rotational speed N. For example, when the required load L increases, the amount of fuel injection readily increases, and the engine readily produces an increased torque. On the other hand, when the air-fuel ratio deviates from the target air-fuel ratio A/F due to an increase in the amount Q of fuel injection, the opening degree of the throttle valve 20 is so controlled that the air-fuel ratio becomes the target air-fuel ratio A/F. That is, the air-fuel ratio changes following a change in the amount Q of fuel injection.

According to this embodiment as shown in Fig. 18(A) or 18(B), when the first combustion is effected, the main injection of fuel of the amount Qm calculated at step 105 is executed near the compression top dead center followed by an injection of fuel of the amount Qpfin calculated at step 111 or of the amount Qa calculated at step 115 as pilot injection or expansion-stroke injection at a timing different from the main injection. In the first combustion, therefore, though the oxygen concentration is smaller than that in the second combustion, a peroxide formed by the pilot injection or by the expansion-stroke injection compensates for the lack of oxygen concentration. This suppresses the first combustion from losing stability, compared to the second combustion, that is caused by the lack of oxygen concentration.

According to this embodiment, further, when it is required to enrich the exhaust gas, fuel is injected at step 115 in the expansion stroke so that the air-fuel ratio of the exhaust gas becomes richer than that of the air-fuel ratio in the cylinder. It is therefore allowed to stabilize the combustion by causing the air-fuel ratio in the cylinder to become relatively lean, and to promote the rise of temperature of the catalyst 25 disposed in the exhaust gas passage by causing the air-fuel ratio of the exhaust gas to become relatively rich.

According to this embodiment, further, the amount Qm of main fuel injection is decreased as the air-fuel ratio becomes rich in the first combustion, and the amount Qpfin of pilot injection is increased at steps 110 and 111. It is therefore allowed to suppress a change in the output by maintaining the total injection amount (Am + Qpfin) constant while suppressing the combustion from losing stability that stems from when the air-fuel ratio becomes rich in the cylinder.

According to this embodiment, further, the basic amount Qpbase of pilot injection increases with a decrease in the required load L as explained with reference to Fig. 17A. That is, as the required load becomes small, the amount Qm of main fuel injection is decreased while the amount Qpfin of pilot injection is increased. It is therefore allowed to suppress a change in the output by maintaining the total injection amount (Qm + Qpfin) constant while suppressing the combustion from losing stability caused by a rich air-fuel ratio in the cylinder during the low-load operating condition where the combustion tends to lose stability.

In the first combustion, the fuel flows in an increased amount into the EGR passage 29 compared to that in the second combustion. The fuel that flows into the EGR passage 29 is purified by the catalyst 53 disposed in the EGR passage 29. When the catalyst 53 has not been activated, however, the fuel that flows into the EGR passage 29 is directly supplied into the combustion chamber 5. In this embodiment, therefore, the pilot injection is executed in the first combustion in order to decrease the ratio of the recirculated fuel compared to the fuel supplied into the combustion chamber 5 before the main injection. Accordingly, it is allowed to suppress the total amount of fuel supplied into the combustion chamber 5 before the main injection from greatly changing depending upon whether the catalyst 53 in the EGR passage 29 has been activated.

Described below is a second embodiment of the internal combustion engine of the present invention. The constitution of this embodiment is nearly the same as the constitution of the first embodiment shown in Fig. 1. Therefore, this embodiment exhibits nearly the same effect as that of the first embodiment. In this embodiment, further, though not diagrammed, the pilot injection is effected not only in the first combustion but also in the second combustion at the end of the compression stroke just before the main injection. Besides, the pilot fuel injection is effected in the first combustion at the end of the compression stroke just before the main injection, which is ahead of the pilot fuel injection effected in the second combustion at the end of the compression stroke just before the main injection. According to this embodiment, as in the first embodiment, the pilot injection is effected in addition to the main injection to stabilize the combustion relying upon a peroxide formed by the pilot injection. On the other hand, when the pilot injection is effected at the end of the compression stroke just before the main injection, oxygen is consumed resulting in a lack of oxygen at the time when the main injection is effected. As described above, therefore, the pilot fuel injection is effected in the first combustion at the end of the compression stroke just before the main injection, ahead of the pilot fuel injection effected in the second combustion at the end of the compression stroke just before the main injection, in order to advance the timing of pilot fuel injection in the first combustion ahead of that in the second combustion. This suppresses the lack of oxygen at the time when the main injection is effected in the first combustion. Besides, the pilot injection effected in the first combustion stabilizes the combustion owing to a peroxide formed by the pilot injection.

Described below is a third embodiment of the internal combustion engine of the present invention. The constitution of this embodiment is nearly the same as the constitution of the first embodiment shown in Fig. 1. Fig. 19 is a diagram similar to Fig. 18 and illustrates the fuel injection timings according to this embodiment. In this embodiment, as shown in Fig. 19, the main injection effected in the first combustion near the compression top dead center TDC is followed by a VIGOM injection or the expansion stroke injection at a timing different from the main injection. In detail, when it is not required to enrich the exhaust gas in the first combustion, the VIGOM injection (Qv) is effected between the exhaust stroke and the intake stroke as shown in Fig. 19(A) and, then, the main injection (Qm) is effected near the compression top dead center TDC. On the other hand, when it is required to enrich the exhaust gas in the first combustion, the main injection (Qm) is, first, effected near the compression top dead center TDC and, then, the expansion stroke injection (Qa) is effected in the expansion stroke as shown in Fig. 19(B). This embodiment, too, exhibits nearly the same effect as that of the first embodiment.

In the above-mentioned embodiments, the further injection is limited to a particular injection timing different from that of the main injection. In the internal combustion engine according to the present invention, however, the timing of the further injection is in no way limited to the above-mentioned injection timings only but may be any other timing different from the timing of the main injection.

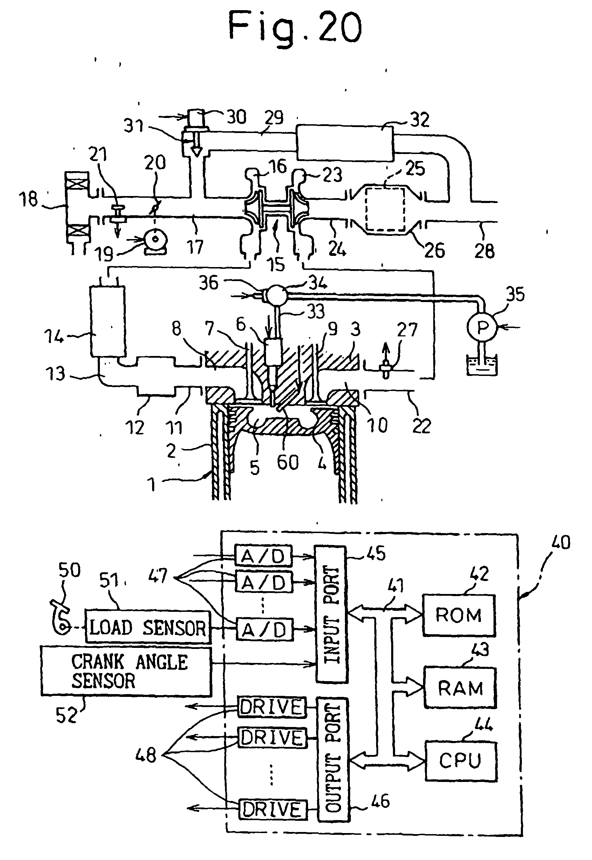

Fig. 20 illustrates a fourth embodiment in which the present invention is applied to a four-stroke compression ignition-type internal combustion engine. In Fig. 20, reference numerals same as the reference numerals of Fig. 1 denote the same parts and portions as those shown in Fig. 1, and reference numeral 60 denotes a glow plug onto which the fuel spray is blown and into which an electric current is supplied to stably ignite the fuel spray. In this embodiment as shown in Fig. 20, though the catalyst 53 (see Fig. 1) is not arranged, it is allowable to arrange the catalyst 53 in the same manner as in the first embodiment.

Output signals of a reducing agent sensor 62 and of a catalyst gas temperature sensor 64 are input to an input port 45 through corresponding AD converters 47. An output port 46 is connected to the glow plug 60.

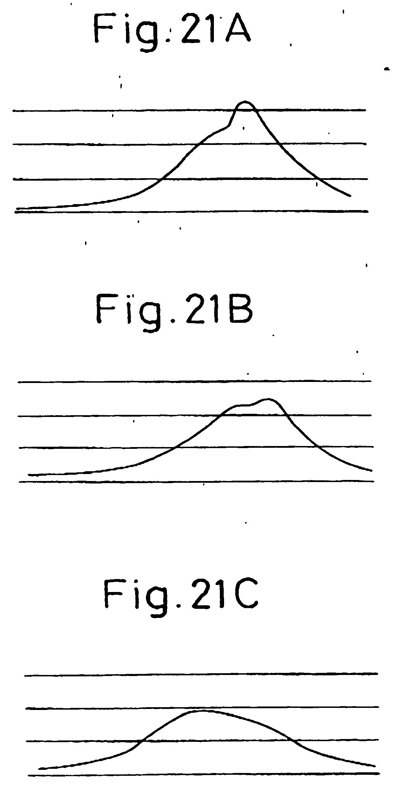

Fig. 21A shows a change in the combustion pressure in the combustion chamber 5 of when the air-fuel ratio A/F is near 21 and smoke is produced in the largest amount, Fig. 21B shows a change in the combustion pressure in the combustion chamber 5 of when the air-fuel ratio A/F is near 18, almost no smoke is produced, and the combustion is stable, and Fig. 21C shows a change in the combustion pressure in the combustion chamber 5 of when the air-fuel ratio A/F is near 18, almost no smoke is produced, but the combustion is unstable. As will be understood from the comparison of Fig. 21A with Fig. 21B, when the smoke is almost not produced as in the case of Fig. 21B, the combustion pressure is lower than that of the case of Fig. 21A where the smoke is produced in large amounts. Further, as will be understood from the comparison of Fig. 21B with Fig. 21C, when the combustion is not stable as in the case of Fig. 21B, the combustion pressure is lower than that of the case of Fig. 21C where the combustion is stable. Though not diagramed, it has been learned from the experimental results similar to those of Figs. 21A to 21C that a maximum value (peak) of combustion pressure in the first combustion (low-temperature combustion) in which the amount of the EGR gas supplied into the combustion chamber 5 is larger than the amount of the EGR gas with which the amount of soot production becomes a peak, permitting almost no soot to be produced, is smaller than a maximum value (peak) of combustion pressure in the second combustion (based on the conventional combustion method) in which the amount of the EGR gas supplied into the combustion chamber 5 is smaller than the amount of the EGR gas with which the amount of soot production becomes a peak. From this fact, it can be said that a fluctuation in the engine rotational speed due to the explosion in the first combustion is smaller than a fluctuation in the engine rotational speed due to the explosion in the second combustion.

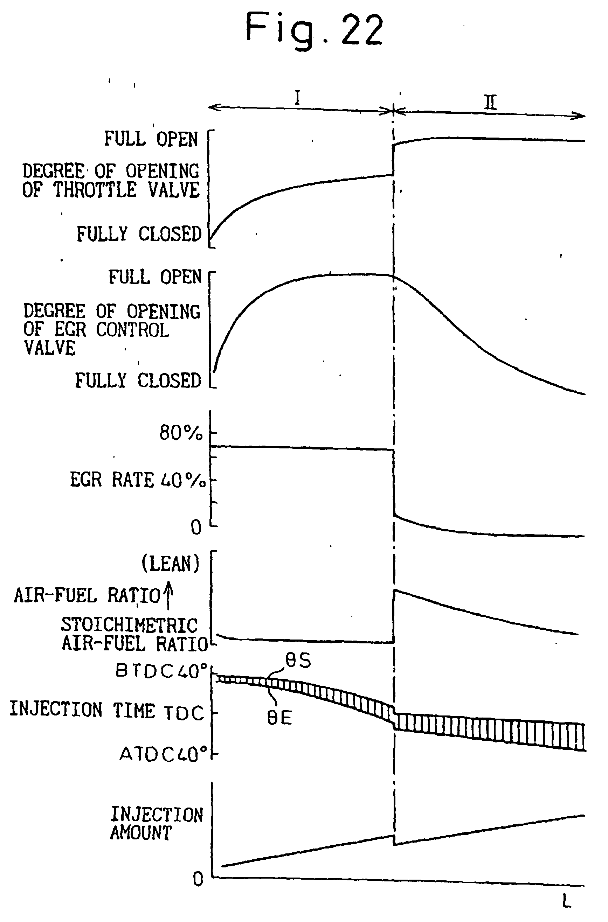

Next, briefly described below, with reference to Fig. 22, is the control of the operation in the first operating region I and in the second operating region II shown in Fig. 7. Fig. 22 shows the opening degree of the throttle valve 20 for the required load L, opening degree of the EGR control valve 31, EGR rate, air-fuel ratio, injection timing and the amount of injection. In the first operating region I, where the required load L is low as shown in Fig. 22, the opening degree of the throttle valve 20 gradually increases from near the fully closed state up to about a two-thirds opened state with an increase in the required load L, while the opening degree of the EGR control valve 31 gradually increases from nearly the fully closed state up to the fully opened state with an increase in the required load L. Further, in the example shown in Fig. 22, the EGR rate is about 70 percent in the first operating region I, and the air-fuel ratio is slightly lean. In other words, the opening degree of the throttle valve 20 and the opening degree of the EGR control valve 31 are so controlled that the EGR rate is nearly 70 percent in the first operating region I and the air-fuel ratio is slightly lean. In the first operating region I, further, the fuel is injected before the compression top dead center TDC. In this case, the injection start timing θS is delayed with an increase in the required load L, and the injection end timing θE, too, is delayed as the injection start timing θS is delayed.

During the idling operation, the throttle valve 20 is closed to nearly the fully closed state and, at this time, the EGR control valve 31, too, is closed to nearly the folly closed state. When the throttle valve 20 is closed to nearly the fully closed state, the pressure in the combustion chamber 5 decreases at the start of compression, and the compression pressure decreases. When the compression pressure decreases, the compression work by the piston 4 decreases and, hence, vibration of the engine body 1 decreases. That is, during the idling operation, the throttle valve 20 is closed to nearly the fully closed state to decrease the vibration of the engine body 1 by decreasing the compression pressure. This is also done because, when the engine is running at a low speed, a change in the revolution due to explosion becomes greater than that of when the engine is running at a high speed; i.e., the problem of vibration of the engine body 1 becomes conspicuous as the rotational speed decreases. Accordingly, a target rotational speed during the idling operation is set by taking into consideration the vibration caused by the compression pressure and the vibration caused by a fluctuation in the engine rotational speed.

On the other hand, when the engine operating region changes from the first operating region I to the second operating region II, the opening degree of the throttle valve 20 is increased stepwise from nearly the two-thirds opened state up to the fully opened state. Here, in the example shown in Fig. 22, the EGR rate is decreased stepwise from about 70 percent down to less than 40 percent, and the air-fuel ratio is increased stepwise. That is, since the EGR rate jumps over the range of EGR rates (Fig. 5) where smoke is produced in large amounts, smoke is not produced in large amounts when the operating region of the engine changes from the first operating region I to the second operating region II.

In the second operating region II, the combustion has been performed in a customary manner. In the second operating region II, the throttle valve 20 is maintained in the fully opened state except portions, and the opening degree of the EGR control valve 31 is gradually decreased with an increase in the required load L. Here, however, the air-fuel ratio remains lean despite of an increase in the required load L. In the second operating region II, further, the injection start timing θS is near the compression top dead center TDC.

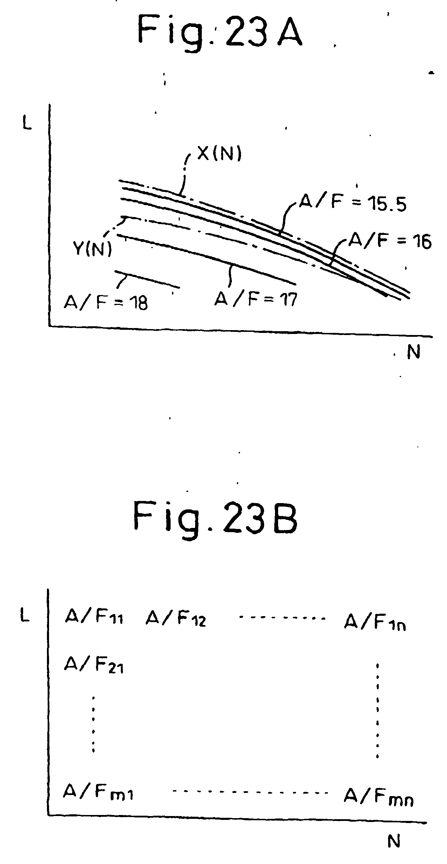

Fig. 23A illustrates target air-fuel ratios A/F in the first operating region I. In Fig. 23A, curves representing A/F = 15.5, A/F = 16, A/F = 17 and A/F = 18 are those of when the target air-fuel ratios are 15.5, 16, 17 and 18, and air-fuel ratios among the curves are determined by the proportional distribution. As shown in Fig. 23A, the air-fuel ratio is lean in the first operating region I. In the first operating region I, further, the target air-fuel ratio A/F becomes lean as the required load L decreases. That is, the amount of heat generated by the combustion decreases with a decrease in the required load L. Therefore, the low-temperature can be executed even by lowering the EGR rate with a decrease in the required load L. The air-fuel ratio increases with a decrease in the EGR rate and, hence, the target air-fuel ratio A/F increases with a decrease in the required load L as shown in Fig. 9A. The fuel efficiency improves with an increase in the target air-fuel ratio A/F. According to the embodiment of the invention, therefore, the target air-fuel ratio A/F is increased as the required load L decreases in order to render the air-fuel ratio as lean as possible.

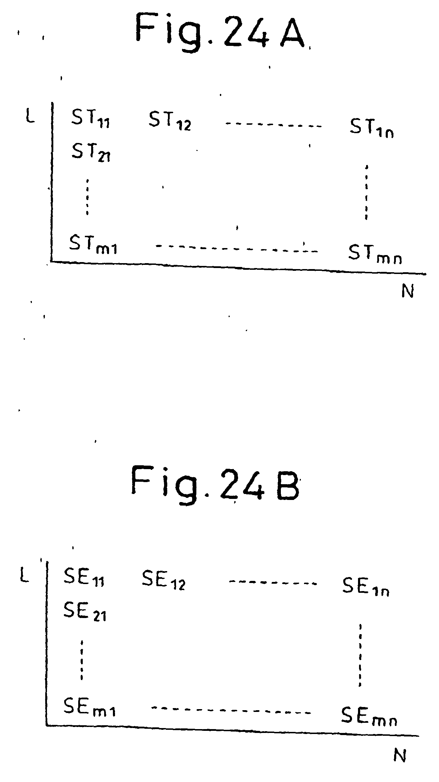

The target air-fuel ratio A/F shown in Fig. 23A has been stored in advance in the ROM 42 in the form of a map of a function of the required load L and the engine rotational speed N, as shown in Fig. 23B. Further, target opening degrees ST of the throttle valve 20 necessary for accomplishing the target air-fuel ratios A/F shown in Fig. 23A, have been stored in advance in the ROM 42 in the form of a map as a function of the required load L and the engine rotational speed N, as shown in Fig. 24A. Moreover, target opening degrees SE of the EGR control valve 31 necessary for setting the air-fuel ratio to be target air-fuel ratios A/F shown in Fig. 23A, have been stored in advance in the ROM 42 in the form of a map as a function of the required load L and the engine rotational speed N as shown in Fig. 24B.

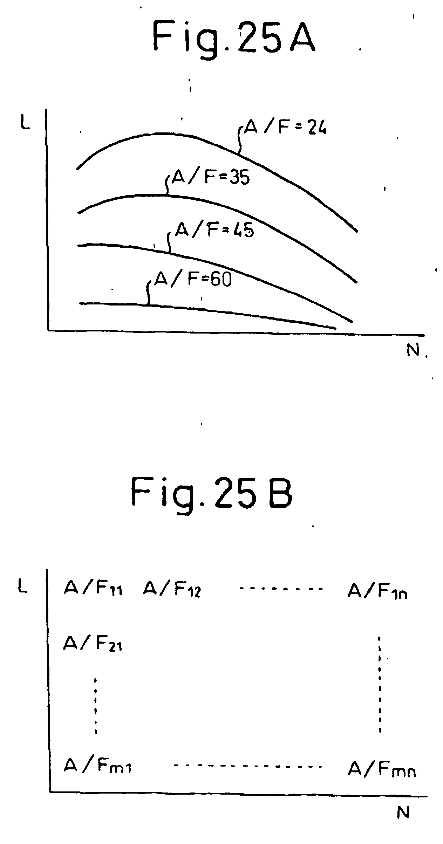

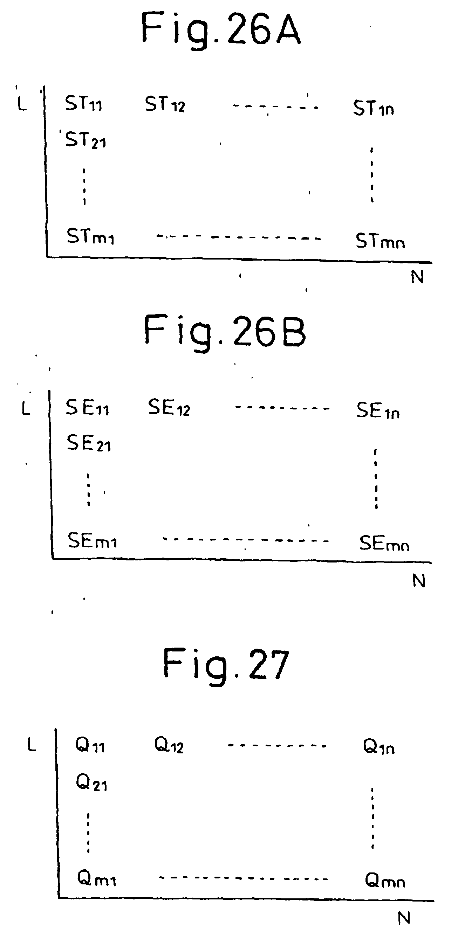

Fig. 25A shows target air-fuel ratios A/F at the time of the second combustion, i.e., at the time of normal combustion by the conventional combustion method. In Fig. 25A, curves represented by A/F = 24, A/F = 35, A/F = 45 and A/F = 60, stand for target air-fuel ratios 24, 35, 45 and 60, respectively. The target air-fuel ratios A/F shown in Fig. 25A have been stored in advance in the ROM 42 in the form of a map as a function of the required load L and the engine rotational speed N as shown in Fig. 25B. Target opening degrees ST of the throttle valve 20 necessary for setting the air-fuel ratio to be the target air-fuel ratios A/F shown in Fig. 25A have been stored in advance in the ROM 42 in the form of a map as a function of the required load L and the engine rotational speed N as shown in Fig. 26A, and target opening degrees SE of the EGR control valve 31 necessary for setting the air-fuel ratio to be the target air-fuel ratios A/F shown in Fig. 25A have been stored in advance in the ROM 42 in the form of a map as a function of the required load L and the engine rotational speed N as shown in Fig. 26B. When the second combustion is being executed, the amount Q of fuel injection is calculated based upon the required load'L and the engine rotational speed N. The fuel injection amount Q has been stored in advance in the ROM 42 in the form of a map as a function of the required load L and the engine rotational speed N as shown in Fig. 27.

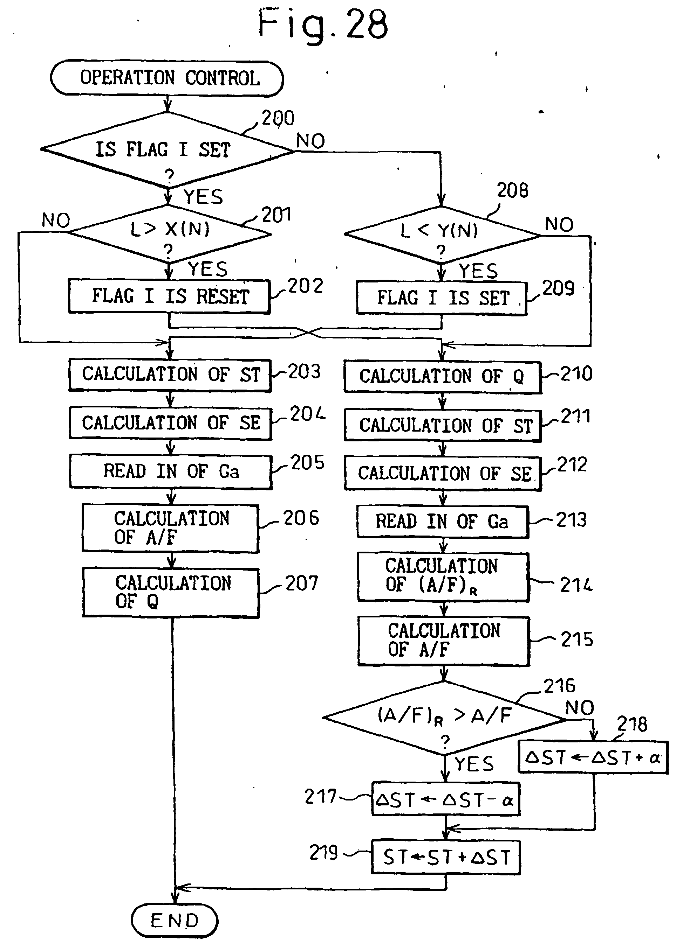

Next, controlling the operation according to the embodiment will be described with reference to Fig. 28. Referring to Fig. 28, first, it is judged at step 200 whether a flag I has been set to indicate that the operating condition of the engine is in the first operating region I. When the flag I has been set, i.e., when the operating condition of the engine is in the first operating region I, the routine proceeds to step 201 where it is judged whether the required load has become larger than the first boundary X(N). When L ≦ X(N), the routine proceeds to step 203 to effect the first combustion (low-temperature combustion). On the other hand, when it is judged at step 201 that L > X(N), the routine proceeds to step 202 where the flag I is reset. The routine, then, proceeds to step 210 where the second combustion (normal combustion, i.e., combustion by the conventional combustion method) is effected.

When the flag I has not been set at step 200, i.e., when the operating condition of the engine is in the second operating region II, the routine proceeds to step 208 where it is judged whether the required load has become smaller than the second boundary Y(N). When L ≧ Y(N), the routine proceeds to step 210 where the second combustion is effected. When it is judged at step 208 that L < Y(N), the routine proceeds to step 209 where the flag I is set. The routine then proceeds to step 203 to effect the first combustion.

At step 203, a target opening degree ST cf the throttle valve 20 is calculated from the map shown in Fig. 24A, and the opening degree of the throttle valve 20 is used as the target opening degree ST. Then, at step 204, a target opening degree SE of the EGR control valve 31 is calculated from the map shown in Fig. 24B, and the opening degree of the EGR control valve 31 is used as the target opening degree SE. Next, at step 205, a mass flow rate of the intake air (hereinafter simply referred to as the intake air amount) Ga detected by the mass flow-rate detector 21 is read and at step 206, a target air-fuel ratio A/F is calculated from the map shown in Fig. 23B. Then, at step 207, a fuel injection amount Q necessary for rendering the air-fuel ratio to become the target air-fuel ratio A/F is calculated based on the intake air amount Ga and on the target air-fuel ratio A/F.

Thus, when the low-temperature combustion is being executed, the opening degree of the throttle valve 20 and the opening degree of the EGR control valve 31 are readily brought into agreement with the target opening degrees ST and SE corresponding to the required load L and the engine rotational speed N upon a change in the required load L or the engine rotational speed N. Therefore, when, for example, the required load L increases, the amount of the air in the combustion chamber 5 readily increases, and the engine readily produces an increased torque. On the other hand, when the opening degree of the throttle valve 20 or the opening degree of the EGR control valve 31 changes causing a change in the intake air amount, the change in the intake air amount Ga is detected by the mass flow-rate detector 21, and the fuel injection amount Q is controlled based on the intake air amount Ga that is detected. That is, the fuel injection amount Q changes after the intake air amount Ga has really changed.

At step 210, on the other hand, a target fuel injection amount Q is calculated from the map shown in Fig. 27, and this fuel injection amount is used as the target fuel injection amount Q. Then, at step 211, a target opening degree ST of the throttle valve 20 is calculated from the map shown in Fig. 26A. At step 212, a target opening degree SE of the EGR control valve 31 is calculated from the map shown in Fig. 26B, and the opening degree of the EGR control valve 31 is used as the target opening degree SE. Then, at step 213, an intake air amount Ga detected by the mass flow-rate detector 21 is read.

Then, at step 214, a real air-fuel ratio (A/F)_{R} is calculated from the fuel injection amount Q and the intake air amount Ga. At step 215, a target air-fuel ratio A/F is calculated from the map shown in Fig. 25B. Then, at step 216, it is judged whether the real air-fuel ratio (A/F)_{R} is larger than the target air-fuel ratio A/F. When (A/F)_{R} > A/F, the routine proceeds to step 217 where a correction value ΔST for the throttle opening degree is decreased by a predetermined value α only, and the routine proceeds to step 219. When (A/F)ₙ ≦ A/F, on the other hand, the routine proceeds to step 218 where the correction value ΔST is increased by the predetermined value α only, and the routine proceeds to step 219. At step 219, the correction value AST is added to the target opening degree ST of the throttle valve 20 to calculate a final target opening degree ST. The opening degree of the throttle valve 20 is used as the final target opening degree ST. That is, the opening degree of the throttle valve 20 is so controlled that the real air-fuel ratio (A/F)_{R} becomes the target air-fuel ratio A/F.

Thus, when the second combustion is being executed, the fuel injection amount is readily brought into agreement with the target fuel injection amount Q corresponding to the required load L and the engine rotational speed N upon a change in the required load L or the engine rotational speed N. when, for example, the required load L increases, the amount of the fuel injection readily increases, and the engine readily produces an increased torque. On the other hand, when the fuel injection amount Q increases causing the air-fuel ratio to be deviated from the target air-fuel ratio A/F, the opening degree of the throttle valve 20 is so controlled that the air-fuel ratio becomes the target air-fuel ratio A/f. That is, the air-fuel ratio changes after the fuel injection amount Q has changed.

In the embodiments described above, the fuel injection amount Q is open-loop-controlled when the low-temperature combustion is being effected, and when the second combustion is being effected, the air-fuel ratio is controlled by varying the opening degree of the throttle valve 20. It is, however, also allowable, when the low-temperature combustion is being effected, to control the fuel injection amount Q, by feedback, relying upon the output signal of the air-fuel ratio sensor 27 and to control, when the second combustion is being effected, the air-fuel ratio by varying the opening degree of the EGR control valve 31.

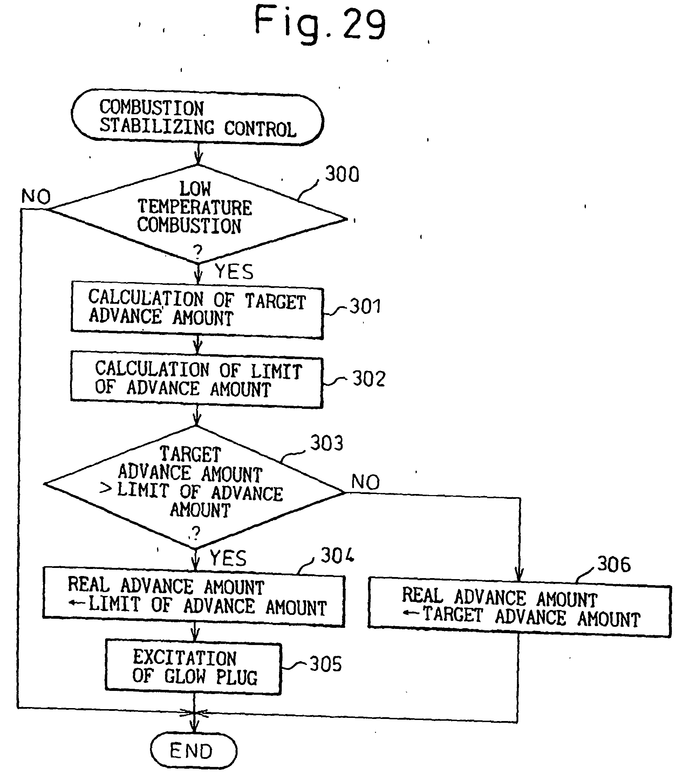

Fig. 29 is a flowchart illustrating a control method for stabilizing the combustion, i.e., for controlling a change in the combustion pressure to become as shown in Fig. 21B. When the routine starts as shown in Fig. 29, it is, first, judged at step 300 whether the operating condition is for effecting the low-temperature combustion. When the answer is no, it is so judged that the combustion pressure should not be changed as shown in Fig. 21B but should be changed as shown in Fig. 21A, and the routine ends. When the answer is yes, the routine proceeds to step 301 where a target advance amount for the fuel injection timing is calculated to stabilize the combustion, i.e., to change the combustion pressure as shown in Fig. 21B. For example, when the combustion pressure changes as shown in Fig. 21C and the combustion is unstable, a target advance amount for the fuel injection timing is determined depending upon the unstable degree of combustion. On the other hand, when the combustion pressure changes as shown in Fig. 21B and the combustion is stable, the target advance amount for the fuel injection timing is set to be zero. Then, at step 302, a limit advance amount for the fuel injection timing is calculated based upon the relationship between the fuel injection timing and the motion of the piston 4, and also based upon the cooling water temperature, required load, engine rotational speed and air-fuel ratio. In detail, even when the fuel injection timing is advanced, bore flashing occurs when the fuel injection timing is too early relative to the piston 4 rise timing, and the combustion becomes rather unstable. A limit advance amount for the fuel injection timing is determined in view of the above-mentioned point.

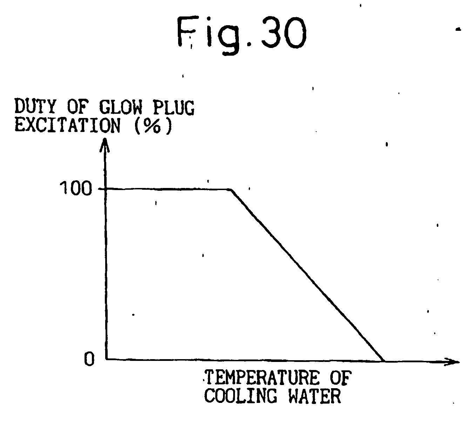

Then, at step 303, it is judged whether the target advance amount calculated at step 301 is larger than the limit advance amount calculated at step 302. When the answer is yes, it is so judged that bore flashing occurs if the target advance amount for the fuel injection timing is set to be the real advance amount and the combustion loses stability. Accordingly, the routine proceeds to step 304. For example, an affirmative judgement is rendered at step 303 when the load is small and the cooling water temperature is low, or when the low-temperature combustion is effected and the air-fuel ratio is rendered to be rich. When the answer is no, on the other hand, it is so judged that bore flashing does not occur and the combustion remains stable even if the target advance amount for the fuel injection timing is set to be the real advance amount, and the routine proceeds to step 306. At step 304, the limit advance amount for the fuel injection timing is set to be the real advance amount to avoid bore flashing. That is, the fuel injection timing is advanced by only the limit advance amount but is not advanced up to the target advance amount. Then, at step 305, an electric current is supplied to the glow plug 60 to compensate for the lack of advance amount for the fuel injection timing. Fig. 30 is diagram illustrating a duty in supplying an electric current to the glow plug 60. As shown in Fig. 30, the duty is set to become high with a decrease in the cooling water temperature. The flow of current to the glow plug 60 is distontinued at a moment when the injected fuel spray has reached the glow plug 60. At step 306, on the other hand, the target advance amount for the fuel injection timing is set to be the real advance amount, and no current is supplied to the glow plug 60.

According to this embodiment, when the low-temperature combustion is being effected and it is not desired to advance the fuel injection timing in excess of the limit advance amount, i.e., when the answer is yes at step 303, the electric current is supplied to the glow plug 60 at step 305, the fuel spray is stably ignited and the combustion is stabilized. That is, when the combustion can be stabilized by advancing the fuel injection timing, the current is not supplied to the glow plug 60 until when the answer becomes no at step 303, but the current is supplied to the glow plug 60 when the affirmative answer is rendered at step 303 to stabilize the combustion. Therefore, the electric current is not maintained supplied to the glow plug 60 until it is no longer necessary. Further, when it is not desired to advance the fuel injection timing, the combustion is not stabilized by advancing the fuel injection timing by the target advance amount which is larger than the limit advance amount. In such a case, the fuel injection timing is advanced by the limit advance amount at step 304, and the electric current is supplied to the glow plug 60 at step 305 to stabilize the combustion. This prevents the combustion from losing stability that results when the fuel injection timing is excessively advanced.

According to this embodiment, further, the duty cycle for flowing the current to the glow plug increases with a decrease in the cooling water temperature as shown in Fig. 30. That is, the amount of electric current supplied to the glow plug is increased when the cooling water temperature is low and the fuel spray cannot be easily ignited. A large current is not maintained supplied to the glow plug until the cooling water temperature becomes relatively high and until the fuel spray is easily ignited to avoid wasteful consumption of electric power. Instead, an increased amount of electric current is supplied to the glow plug when the cooling water temperature is relatively low and the fuel spray cannot be easily ignited, so that the fuel spray is stably ignited and that the combustion is stabilized.

According to this embodiment, further, the fuel injection timing is no longer advanced in excess of the limit advance amount when the electric current is supplied to the glow plug 60 at step 305, i.e., when the target advance amount for the fuel injection timing is larger than the limit advance amount while the low-temperature combustion is being effected. That is, at step 304, the limit advance amount for the fuel injection timing is used as the real advance amount. This prevents the combustion from losing stability that results from an excess of advance of the fuel injection timing. Besides, the fuel injection timing is relatively delayed as compared to when the fuel injection timing is advanced by the target advance amount. Therefore, the exhaust gas temperature can be raised to promote the activation of the catalyst 25 and the EGR gas-purifying catalyst (not shown) disposed in the EGR passage 29.

According to this embodiment, further, the supply of current t6 the glow plug 60 is discontinued at step 305 when the fuel spray that is injected arrives at the glow plug 60. Therefore, the current is not supplied to the glow plug 60 when it is no longer needed unlike the case of continuing the supply of current to the glow plug even after the fuel spray has arrived at the glow plug 60, and the wasteful consumption of electric power is avoided.

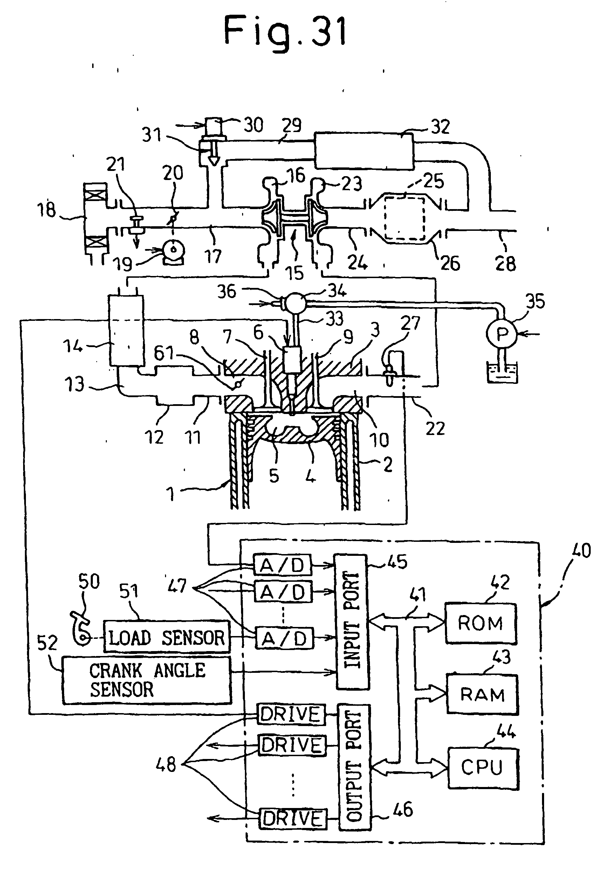

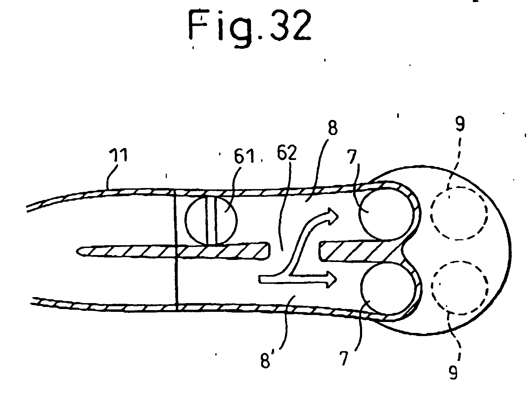

Described below is a fifth embodiment of the internal combustion of the present invention. Fig. 31 is a diagram schematically illustrating the constitution of the fifth embodiment of the internal combustion engine of the present invention, and Fig. 32 is a sectional view illustrating, on an enlarged scale, the intake port 8 shown in Fig. 31. In Figs. 31 and 32, the same reference numerals as those of Fig. 20 denote the same parts or portions as those shown in Fig. 20, and reference numeral 61 denotes a swirl control valve (SCV). In Fig. 32, reference numeral 8 denotes a straight port and reference numeral 8' denotes a helical port. Reference numeral 62 denotes a communication passage for communicating the straight port 8 with the helical port 8'. Referring to Figs. 31 and 32, the constitution of this embodiment is nearly the same as that of the fourth embodiment shown in Fig. 20. Therefore, this embodiment exhibits nearly the same effects as those of the fourth embodiment except a point that will be described below.

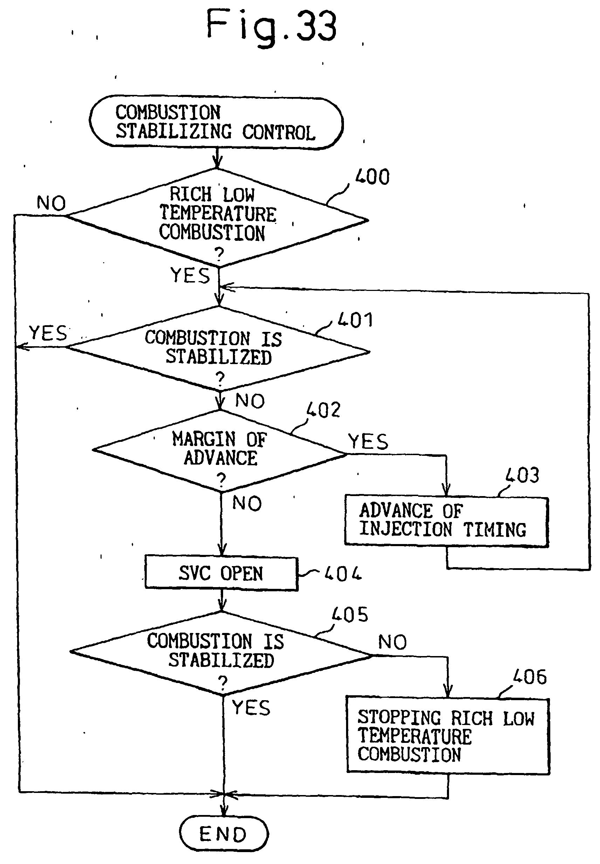

Fig. 33 is a flowchart illustrating a control method for stabilizing the combustion, i.e., for changing the combustion pressure as shown in Fig. 21B. When the routine starts as shown in Fig. 33, it is, first, judged at step 400 whether the operating condition is the one in which the low-temperature combustion is effected on the rich side. When the answer is no, it is so judged that the combustion pressure should not be changed as shown in Fig. 21B but should be changed as shown in Fig. 21A, and the routine ends. When the answer is yes, the routine proceeds to step 401 where, it is judged whether the combustion is stable, i.e., whether the combustion pressure has changed as shown in Fig. 21B. When the answer is yes, it is so judged that no control operation is particularly needed for stabilizing the combustion, and the routine ends. When the answer is no, the routine proceeds to step 402.

At step 402, it is judged whether there is a margin for advancing the fuel injection timing, i.e., whether the target advance amount does not exceed the limit advance amount. When the answer is yes, the routine proceeds to step 403 where the fuel injection timing is advanced to stabilize the combustion. When the answer is no, on the other hand, the routine proceeds to step 404 where the swirl control valve 61 is opened instead of advancing the fuel injection timing to stabilize the combustion, and a swirl is formed in the cylinder. The swirl formed in the cylinder is intensified as the engine operating conditions are shifted toward a high rotational speed and a low load. Then, at step 405, it is judged whether the combustion is stabilized. When the answer is yes, the routine ends maintaining this state. When the answer is no, on the other hand, it is so judged that the combustion cannot be stabilized when the low-temperature combustion is effected on the rich side, and the routine proceeds to step 406 where the low-temperature combustion is no longer effected on the rich side.

According to this embodiment, the swirl control valve 61 is opened at step 404 and the swirl is formed in the cylinder when the low-temperature combustion is executed on the rich side and it is not desirable to advance the fuel injection timing for stabilizing the unstable combustion, i.e., when the answer is no at step 402. Therefore, the rate of combustion is increased and the combustion is stabilized by forming the swirl in the cylinder while inhibiting the operation of the swirl control valve 61 when the formation of swirl is no longer needed such as when the affirmative answer is rendered at step 402, yet preventing the combustion from losing stability that results when the fuel injection timing is excessively advanced,

According to this embodiment, further, the swirl is intensified as the engine operating condition shifts toward a high rotational speed and a low load at step 404. The swirl is intensified under the conditions of a high rotational speed and a low load where the combustion tends to become unstable, in order to increase the rate of combustion and to stabilize the combustion.

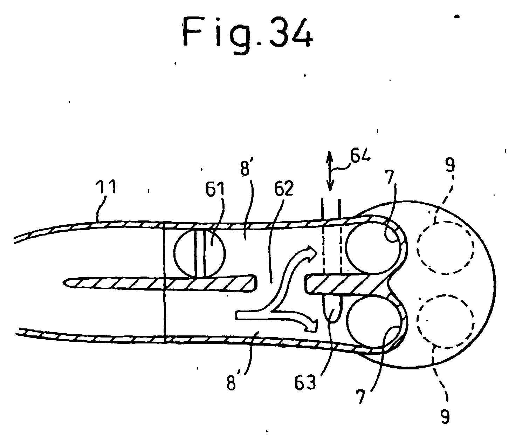

Next, described below is a sixth embodiment of the internal combustion engine of the present invention. Fig. 34 is a sectional view showing, on an enlarged scale and like in Fig. 32, the intake port of the internal combustion engine according to the sixth embodiment of the invention. In Fig. 34, the same reference numerals as those shown in Figs. 20, 31 and 32 denote the same parts or portions as those shown in Figs. 20, 31 and 32, and reference numeral 63 denotes a retractable helical protuberance formed on one side of the helical ports 8. The helical protuberance 63 is retractable being slid in the direction of an arrow 64. As shown in Fig. 34, the swirl is formed in the cylinder when the helical protuberance 63 is protruded. This embodiment, too, exhibits nearly the same effect as that of the fifth embodiment.

## Claims

1. An internal combustion engine, in which an amount of production of soot gradually increases and then peaks when an amount of inert gas supplied into a combustion chamber increases and in which a further increase of the amount of inert gas supplied into the combustion chamber results in a temperature of a fuel and a surrounding gas, at the time of combustion in the combustion chamber, becoming lower than a temperature of production of soot and therefore almost no production of soot occurs, wherein a first combustion where the amount of the inert gas supplied into the combustion chamber is larger than the amount of inert gas where the amount of production of soot peaks and almost no soot is produced and a second combustion where the amount of inert gas supplied into the combustion chamber is smaller than the amount of inert gas where the amount of production of soot peaks are selectively switched, **characterized in that** whenever the first combustion is performed, not only a main injection which is performed near a compression top dead center, but also a further injection, which is performed at a different timing from a timing of the main injection, is performed.

2. An internal combustion engine according to claim 1, **characterized in that** an air-fuel ratio of the exhaust gas is made richer than an air-fuel ratio in the cylinder by performing the further injection.

3. An internal combustion engine according to claim 1, **characterized in that** when the first combustion is performed, as an air-fuel ratio becomes richer, an amount of the main injection is decreased and an amount of the further injection is increased.

4. An internal combustion engine according to claim 1, **characterized in that** an amount of the further injection is increased as a load becomes lower.

5. An internal combustion engine according to claim 1, **characterized in that** not only while the first combustion is performed, but also while the second combustion is performed, the further injection is performed at an end of compression stroke immediately before the timing of the main injection and a timing of the further injection during the first combustion is advanced more than a timing of the further injection during the second combustion.

6. An internal combustion engine according to claim 1, **characterized in that** the engine comprises an exhaust gas recirculation passage with a catalyst, wherein the further injection is performed when the first combustion is performed.

## Patentansprüche

1. Brennkraftmaschine, in der eine erzeugte Rußmenge allmählich zunimmt und dann einen Spitzenwert erreicht, wenn eine in die Verbrennungskammer zugeführte Inertgasmenge zunimmt, und in der eine weitere Zunahme der in die Verbrennungskammer zugeführte Inertgasmenge zu einer Temperatur eines Kraftstoffs und eines Umgebungsgases zum Zeitpunkt der Verbrennung in der Verbrennungskammer führt, die niedriger als eine Temperatur ist, bei der Ruß erzeugt wird, und somit fast keine Rußerzeugung auftritt, wobei zwischen einer ersten Verbrennung, bei der die in die Verbrennungskammer zugeführte Inertgasmenge größer als die Inertgasmenge ist, bei der die erzeugte Rußmenge einen Spitzenwert erreicht und fast kein Ruß erzeugt wird, und zwischen einer zweiten Verbrennung, bei der die in der Verbrennungskammer geführte Inertgasmenge kleiner als die Inertgasmenge ist, bei der erzeugte Rußmenge einen Spitzenwert erreicht, wahlweise umgeschaltet wird,
**dadurch gekennzeichnet, dass**
immer wenn die erste Verbrennung durchgeführt wird, nicht nur eine Haupteinspritzung in der Nähe des oberen Kompressions-Totpunktbereichs, sondern ebenfalls eine weitere Einspritzung zu einem von der Haupteinspritzung unterschiedlichen Zeitpunkt durchgeführt wird.

2. Brennkraftmaschine nach Anspruch 1,
**dadurch gekennzeichnet, dass**
das Luftkraftstoffverhältnis des Abgases fetter als das Luftkraftstoffverhältnis in dem Zylinder mittels der Durchführung einer weiteren Einspritzung eingestellt wird.

3. Brennkraftmaschine nach Anspruch 1,
**dadurch gekennzeichnet, dass**,
wenn die erste Verbrennung durchgeführt wird, wenn das Luftkraftstoffverhältnis fetter wird, eine Haupteinspritzmenge vermindert wird, und eine Menge der weiteren Einspritzung erhöht wird.

4. Brennkraftmaschine nach Anspruch 1,
**dadurch gekennzeichnet, dass**
die Menge der weiteren Einspritzung erhöht wird, wenn die Last geringer wird.

5. Brennkraftmaschine nach Anspruch 1,
**dadurch gekennzeichnet, dass**
nicht nur während der Durchführung der ersten Verbrennung, sondern auch während der Durchführung der zweiten Verbrennung die weitere Einspritzung am Ende eines Kompressionshubs unmittelbar vor dem Zeitpunkt der Haupteinspritzung durchgeführt wird, und ein Zeitpunkt der weiteren Einspritzung während der ersten Verbrennung mehr als ein Zeitpunkt der weiteren Einspritzung während der zweiten Verbrennung vorgestellt wird.

6. Brennkraftmaschine nach Anspruch 1,
**dadurch gekennzeichnet, dass**
die Brennkraftmaschine einen Abgasrückführkanal mit einem Katalysator aufweist, wobei die weitere Einspritzung durchgeführt wird, wenn die erste Verbrennung durchgeführt wird.

## Revendications

1. Moteur à combustion interne, dans lequel une quantité de production de suie augmente progressivement puis atteint un sommet lorsqu'une quantité de gaz inertes délivrés dans une chambre de combustion augmente, et dans lequel une augmentation supplémentaire de la quantité de gaz inertes délivrés dans la chambre de combustion a pour résultat qu'une température d'un carburant et des gaz environnants, au moment de la combustion dans la chambre de combustion, devient inférieure à une température de production de suie et en conséquence pratiquement plus aucune production de suie ne se produit, dans lequel une première combustion lorsque la quantité de gaz inertes délivrés dans la chambre de combustion est supérieure à la quantité de gaz inertes lorsque la quantité de production de suie atteint le sommet et presque aucune suie n'est produite et une deuxième combustion dans laquelle la quantité de les inertes délivrés dans la chambre de combustion est inférieure à la quantité de gaz inertes lorsque la quantité de production de suie atteint un sommet sont sélectivement commutées, **caractérisé en ce que** chaque fois que la première combustion est exécutée, non seulement une injection principale qui est exécutée près du point mort haut de compression, mais également une injection supplémentaire, qui est exécutée à un calage différent de celui de l'injection principale, est exécutée.

2. Moteur à combustion interne selon la revendication 1, **caractérisé en ce qu'**un rapport air-carburant des gaz d'échappement est rendu plus riche qu'un rapport air-carburant dans le cylindre en exécutant l'injection supplémentaire.

3. Moteur à combustion interne selon la revendication 1, **caractérisé en ce que** lorsque la première combustion est exécutée, à mesure qu'un rapport air-carburant devient plus riche, une quantité d'injection principale est diminuée et une quantité d'injection supplémentaire est augmentée.

4. Moteur à combustion interne selon la revendication 1, **caractérisé en ce qu'**une quantité d'injection supplémentaire est augmentée à mesure qu'une charge devient moins importante.

5. Moteur à combustion interne selon la revendication 1, **caractérisé en ce que** non seulement lorsque la première combustion est exécutée, mais également lorsque la deuxième combustion est exécutée, l'injection supplémentaire est exécutée à la fin de la course de compression immédiatement avant le calage de l'injection principale et un calage de l'injection supplémentaire pendant la première combustion est avancé davantage qu'un calage de l'injection supplémentaire pendant la deuxième combustion.

6. Moteur à combustion interne selon la revendication 1, **caractérisé en ce que** le moteur comprend un passage de recirculation des gaz d'échappement muni d'un catalyseur, dans lequel l'injection supplémentaire est exécutée lorsque la première combustion est exécutée.
